# EUROPÄISCHE PATENTANMELDUNG

(11) **EP 3 599 241 A1**
(43) Veröffentlichungstag der Anmeldung: **29.01.2020**
(21) Anmeldenummer: 18186142.8
(22) Anmeldetag: 27.07.2018
(51) Int. Cl.: C07F 15/00, H01L 33/00, H01L 21/00

(54) **METALLORGANISCHE VERBINDUNGEN ZUR HERSTELLUNG EINES HALBLEITERELEMENTS ODER EINES ELEKTRONISCHEN SPEICHERS**

(71) Anmelder: UMICORE AG & CO. KG, 63457 Hanau-Wolfgang (DE)
(72) Erfinder: RAU, Nicholas, 35039 Marburg (DE); SUNDERMEYER, Joerg, 35041 Marburg (DE); Schumann, Henrik, 35796 Weinbach (DE); RIVAS NASS, Andreas, 64625 Bensheim (DE); FREY, Annika, 63457 Hanau (DE); SCHORN, Wolf, 76337 Waldbronn (DE); WOERNER, Eileen, 61130 Nidderau (DE); KARCH, Ralf, 63801 Kleinostheim (DE); DOPPIU, Angelino, 63500 Seligenstadt (DE)

(57) **Zusammenfassung**

Die Erfindung betrifft Verbindungen gemäß der allgemeinen Formel [Ru(aren)(R^{a}-N=CR¹-CR³=N-R^{b})] oder [Ru(aren)((R^{c},R^{d})N-N=CR^{H1}-CR^{H3}=N-N(R^{e},R^{f}))]. Dabei ist aren ausgewählt aus der Gruppe bestehend aus einkernigen und mehrkernigen Arenen und Heteroarenen. R¹, R³, R^{H1}, R^{H3} und R^{a} - R^{f} sind unabhängig voneinander ausgewählt aus der Gruppe bestehend aus H, einem Alkylrest (C1 - C10) und einem Arylrest. Sie betrifft weiterhin Verfahren zur Herstellung dieser Verbindungen, Verbindungen, erhältlich nach diesen Verfahren, deren Verwendung sowie ein Substrat, welches auf einer Oberfläche eine Ruthenium-Schicht oder eine Ruthenium enthaltende Schicht aufweist. Zudem betrifft die Erfindung ein Verfahren zur Herstellung von Verbindungen [Ru(aren)X₂]₂, wobei aren ausgewählt ist aus der Gruppe bestehend aus einkernigen und mehrkernigen Arenen und X = Halogen, Verbindungen dieses Typs, erhältlich nach diesem Verfahren, und deren Verwendung. Die vorgenannten Ruthenium(0)-Verbindungen sind auf einfache, kostengünstige und reproduzierbare Art und Weise in hoher Reinheit und guter Ausbeute darstellbar. Aufgrund ihrer hohen Reinheit sind sie für den Einsatz als Ruthenium(0)-Präkursoren geeignet.

## Beschreibung

Die Erfindung betrifft Verbindungen des Typs [Ru(aren)(R^{a}-N=CR¹-CR³=N-R^{b})] und [Ru(aren)((R^{c},R^{d})N-N=CR^{H1}-CR^{H3}=N-N(R^{e},R^{f}))], wobei aren ausgewählt ist aus der Gruppe bestehend aus einkernigen und mehrkernigen Arenen und einkernigen und mehrkernigen Heteroarenen und R¹, R³, R^{H1}, R^{H3} und R^{a} - R^{f} unabhängig voneinander ausgewählt sind aus der Gruppe bestehend aus H, einem Alkylrest (C1 - C10) und einem Arylrest, deren Verwendung sowie ein Substrat, welches auf einer Oberfläche eine Ruthenium-Schicht oder eine Ruthenium enthaltende Schicht aufweist. Sie betrifft weiterhin Verfahren zur Herstellung dieser Ruthenium(0)-Verbindungen, Ruthenium(0)-Verbindungen, erhältlich nach diesen Verfahren, deren Verwendung sowie ein Substrat, welches auf einer Oberfläche eine Ruthenium-Schicht oder eine Ruthenium enthaltende Schicht aufweist. Zudem betrifft die Erfindung ein Verfahren zur Herstellung von Verbindungen des Typs [Ru(aren)X₂]₂, wobei aren ausgewählt ist aus der Gruppe bestehend aus einkernigen und mehrkernigen Arenen und X = Halogen, Verbindungen des Typs [Ru(aren)X₂]₂, erhältlich nach diesem Verfahren, und deren Verwendung.

Verbindungen des Typs [Ru(aren)(R-N=CR^{x}-CR^{y}=N-R)] und Verfahren zu deren Herstellung sind im Stand der Technik bekannt. Einige flüchtige Vertreter dieser Gruppe von Ruthenium(0)-Komplexen finden Verwendung als Ruthenium-Präkursoren in Verfahren zur Abscheidung von Ruthenium-Schichten und/oder von Ruthenium enthaltenden Schichten. Zur Herstellung von Ruthenium-Schichten oder Ruthenium-Filmen werden üblicherweise Gasphasenabscheidungsmethoden oder Sol-Gel-Verfahren eingesetzt.

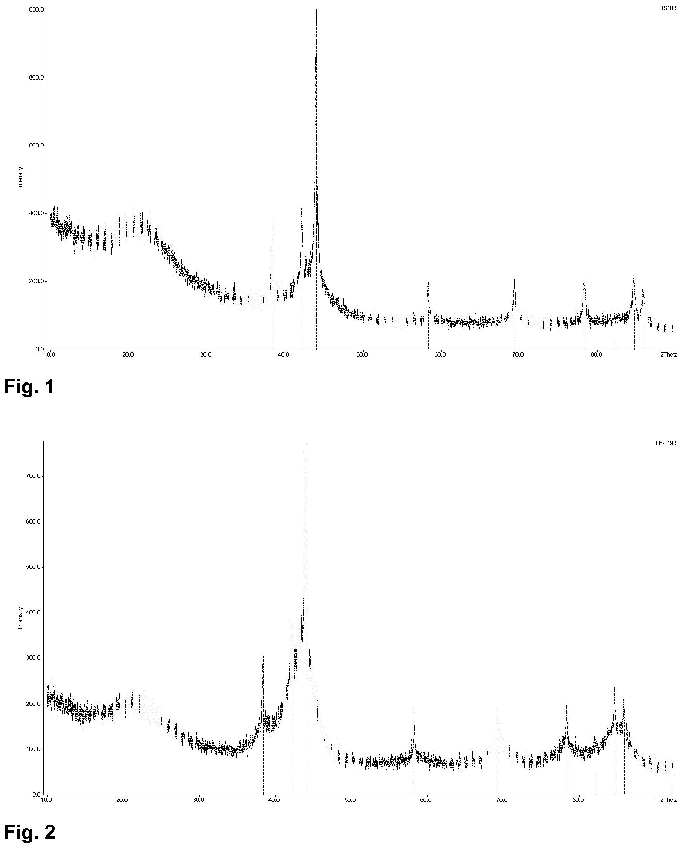

Die Darstellung von Verbindungen des Typs [Ru(aren)(R-N=CR^{x}-CR^{y}=N-R)] erfolgt im Stand der Technik unter anderem nach der von tom Dieck *et al.* beschriebenen Route. (Organometallics 1986, 5, 1449 - 1457) Dabei wird gemäß tom Dieck *et al.* in einem ersten Schritt der Ruthenium(II)-Komplex [Ru(C₆H₆)Cl₂]₂ mit AgBF₄ und R-N=CR^{x}-CR^{y}=N-R (^{R}DAD, Diazadien) zu dem Salz [Ru(C₆H₆)(^{R}DAD)Cl][BF₄] umgesetzt (vgl. Abbildung 1). 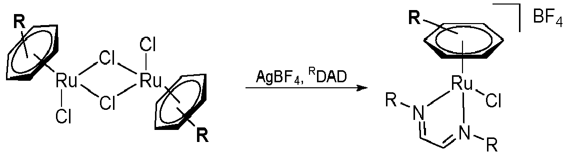 Abbildung 1: Darstellung von [Ru(aren)(^{R}DAD)Cl][BF₄] als Edukt für [Ru(aren)(^{R}DAD)].

In einem zweiten Schritt wird das Ruthenium(II)-Salz [Ru(C₆H₆)(^{R}DAD)Cl][BF₄] mit Natriumnaphthalid zum Ruthenium(0)-Komplex [Ru(C₆H₆)(^{R}DAD)] reduziert. Alternativ wird von tom Dieck *et al.* für ausgewählte Verbindungen die direkte Umsetzung von [Ru(C₆H₆)Cl₂]₂ mit Natriumnaphthalid vorgestellt. Dabei werden zum einen geringere Ausbeuten erzielt als über die erste Route, und zum anderen erweist sich die Abtrennung des überschüssigen Reduktionsmittels zum Teil als schwierig. Die Aufreinigung erfolgt jeweils durch Sublimation und Umkristallisation. Die Ergebnisse der Elementaranalysen der Komplexe des Typs [Ru(C₆H₆)(^{R}DAD)] bewerten die Autoren selbst als unbefriedigend.

Diese Synthesesequenz von tom Dieck *et al.* wird auch zur Herstellung der in WO 2013/117955 A1 beanspruchten Ruthenium(II)-Verbindungen des Typs [Ru(aren)(^{R}DAD)] genutzt.

Der jeweilige Ruthenium(II)-Komplex [Ru(aren)Cl₂]₂ kann zum Beispiel nach einer Vorschrift von Bennett und Smith (J. Chem. Soc., Dalton Trans. 1974, 2, 233), gemäß KR 2014-00138085 A oder nach US 2010/0113814 A1 synthetisiert werden.

Gemäß KR 2014-00138085 A wird der jeweilige Ruthenium(II)-Komplex [Ru(aren)Cl₂]₂ beispielsweise mit einem Alkalimetallcarbonat in *iso*-Propanol oder mit einem elementaren Alkalimetall in Ethylenglykoldimethylether zur gewünschten Zielverbindung [Ru(aren)(^{R}DAD)] umgesetzt.

Ein wesentlicher Nachteil der bekannten Prozessführungen zur Herstellung von Ruthenium(0)-Komplexen des Typs [Ru(aren)(R-N=CR^{x}-CR^{y}=N-R)] besteht darin, dass sie präparativ aufwändig und vergleichsweise kostenintensiv sind. So sind bei der ersten Syntheseroute nach tom Dieck *et al.* insgesamt drei Stufen vorgesehen, wobei AgBF₄ und Natriumnaphthalid relativ kostenintensive Chemikalien darstellen. Bei der alternativen zweistufigen Route nach tom Dieck *et al.* - ebenfalls mit dem Reduktionsmittel Natriumnaphthalid - sind die Ausbeuten deutlich geringer. Die Zielverbindungen des Typs [Ru(C₆H₆)(^{R}DAD)] werden laut Elementaranalysen in unzureichender Reinheit erhalten. Gemäß KR 2014-00138085 A wird [Ru(aren)Cl₂]₂ ebenfalls direkt zum gewünschten Ruthenium(0)-Komplex umgesetzt, sodass insgesamt nur zwei Reaktionsschritte durchzuführen sind. Hier kommen als Reduktionsmittel entweder Alkalimetallcarbonate oder Alkalimetalle zum Einsatz. Der Einsatz von Alkalimetallen als Reduktionsmittel führt aufgrund ihrer Luft- und Feuchtigkeitsempfindlichkeit zu einem erhöhten präparativen Aufwand und ist aus Sicherheitsgründen für die industrielle Anwendung nachteilig. Weiterhin nachteilig ist an den bekannten Verfahren, dass das Spektrum der damit - in Reinform - zugänglichen Komplexe des Typs [Ru(aren)(R-N=CR^{x}-CR^{y}=N-R)], insbesondere mit Blick auf die einsetzbaren Arene, limitiert ist. Des Weiteren weisen die bekannten Verbindungen des Typs [Ru(aren)(R-N=CR^{x}-CR^{y}=N-R)] vergleichsweise hohe Schmelzpunkte auf und sind damit relativ schwer flüchtig. Gegebenenfalls sind - zusätzlich zu einer aufwändigen und/oder kostenintensiven Verfahrensführung - mehrere relativ aufwändige Aufreinigungsschritte erforderlich, wie z. B. eine Sublimation und eine Umkristallisation, bevor sie als Ruthenium(0)-Präkursoren eingesetzt werden können. Dies erhöht den Syntheseaufwand deutlich. Zudem sind die bekannten Synthesemethoden für Ruthenium(II)-Verbindungen des Typs [Ru(aren)Cl₂]₂ teilweise präparativ sehr aufwändig und/oder aufgrund geringer Ausbeute unbefriedigend. Mit den vorbeschriebenen Reaktionsführungen werden die gewünschten Ruthenium(0)-Komplexe folglich in Gesamtausbeuten erhalten, welche mit Blick auf einen industriellen Einsatz dieser Verbindungen vergleichsweise gering sind.

Insgesamt sind die literaturbekannten Syntheserouten unter ökologischen und ökonomischen Gesichtspunkten als unbefriedigend einzustufen.

Der Erfindung liegt daher die Aufgabe zugrunde, diese und weitere Nachteile des Standes der Technik zu überwinden und Verfahren zur Verfügung zu stellen, mit welchen Verbindungen des Typs [Ru(aren)(R-N=CR^{x}-CR^{y}=N-R)] und eine neue Klasse definierter Ruthenium(0)-Verbindungen herstellbar sind. Dabei sollen die Ruthenium(0)-Komplexe einfach, vergleichsweise kostengünstig und reproduzierbar in hoher Reinheit und guter Ausbeute darstellbar sein. Insbesondere soll die Reinheit der Ruthenium(0)-Komplexe den Anforderungen an Ruthenium-Präkursoren zur Herstellung von Ruthenium(0)-Schichten und/oder Ruthenium(0) enthaltenden Schichten genügen. Dabei sollen zumindest einige Vertreter der neuen Verbindungsklasse einen vergleichsweise niedrigen Schmelzpunkt aufweisen. Das Verfahren soll sich außerdem dadurch auszeichnen, dass es - mit vergleichbarer Ausbeute und Reinheit der Zielverbindungen - auch im industriellen Maßstab durchgeführt werden kann. Des Weiteren soll ein Substrat zur Verfügung gestellt werden, welches auf einer Oberfläche eine qualitativ zufriedenstellende Ruthenium(0)-Schicht oder Ruthenium(0) enthaltende Schicht aufweist. Außerdem soll ein Verfahren zur Verfügung gestellt werden, mit dem Ruthenium(II)-Präkursoren des Typs [Ru(aren)Cl₂]₂ einfach, vergleichsweise kostengünstig und in hoher Reinheit und guter Ausbeute darstellbar sind.

Hauptmerkmale der Erfindung sind in Anspruch 1, Anspruch 11, Anspruch 17, Anspruch 18, Anspruch 19, Anspruch 26, Anspruch 28, Anspruch 35, Anspruch 37, Anspruch 39, Anspruch 41 oder Anspruch 43 angegeben. Ausgestaltungen sind Gegenstand der Ansprüche 2 bis 10, 12 bis 16, 20 bis 25, 27, 29 bis 34, 36, 38, 40 oder 42.

Gelöst wird die Aufgabe durch Verbindungen
▪ gemäß der allgemeinen Formel [Ru(aren)(R^{a}-N=CR¹-CR³=N-R^{b})] (A)
   wobei
   i) aren ausgewählt ist aus der Gruppe bestehend aus einkernigen und mehrkernigen Arenen und einkernigen und mehrkernigen Heteroarenen
      und
   ii) R¹, R³, R^{a} und R^{b} unabhängig voneinander ausgewählt sind aus der Gruppe bestehend aus H, einem Alkylrest (C1 - C10) und einem Arylrest
   oder
▪ gemäß der allgemeinen Formel [Ru(aren)((R^{c},R^{d})N-N=CR^{H1}-CR^{H3}=N-N(R^{e},R^{f}))] (B) wobei
   i) aren ausgewählt ist aus der Gruppe bestehend aus einkernigen und mehrkernigen Arenen und einkernigen und mehrkernigen Heteroarenen
      und
   ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest.

Dabei umfassen die allgemeinen Formeln A und B sowohl die Monomere als auch etwaige Oligomere.

Die Alkyl- und/oder Arylreste R¹, R³, R^{H1}, R^{H3} und R^{a} - R^{f} können substituiert sein, beispielsweise teilweise fluoriert oder perfluoriert. Die einkernigen und mehrkernigen Arene und die einkernigen und mehrkernigen Heteroarene können ebenfalls substituiert sein.

Beispiele für die Alkyl- und Arylreste R¹, R³, R^{H1}, R^{H3} und R^{a} - R^{f} sind CH₃, C₂H₅, *n*Pr, *i*Pr, *n*Bu, *t*Bu, *s*Bu, *i*Bu, CH₂*s*Bu, CH₂*i*Bu, CH(CH₃)(*i*Pr), CH(CH₃)(*n*Pr), CH(C₂H₅)₂, C(CH₃)₂(C₂H₅), C₆H₁₁ und C₆H₆.

Nicht Gegenstand der Erfindung sind Verbindungen gemäß der allgemeinen Formel A, wobei aren = Benzol oder aren = Benzolhomologes. Dabei weisen die ausgenommenen Benzolhomologen ein bis sechs Substituenten auf, wobei die Substituenten unabhängig voneinander ausgewählt sind aus der Gruppe bestehend aus einem Alkylrest, einem Alkylsilylrest, einem Alkylaminrest und einem Fluoralkylrest, wobei Alkyl = C1 - C4.

Die beanspruchten Verbindungen des Typs [Ru(aren)(R^{a}-N=CR¹-CR³=N-R^{b})] (A) und des Typs [Ru(aren)((R^{c},R^{d})N-N=CR^{H1}-CR^{H3}=N-N(R^{e},R^{f}))] (B) sind reproduzierbar in guten Ausbeuten und hoher Reinheit darstellbar. Sie eignen sich somit als Ruthenium(0)-Präkursoren für die Abscheidung von Ruthenium-Schichten oder Ruthenium enthaltenden Schichten auf einer Oberfläche eines Substrats, auch im großtechnischen Maßstab. Die Ruthenium(0)-Komplexe sind ausgehend von Ruthenium(II)-Präkursoren des Typs [Ru(aren)X₂]₂ in einer einfachen Zweistufensynthese darstellbar. Besonders vorteilhaft ist, dass sowohl ihre Synthese als auch ihre Reinigung mit einfachen Standardmethoden erfolgen kann, d. h. ohne großen präparativen Aufwand möglich ist. Somit sind die beanspruchten Ruthenium(0)-Komplexe nicht nur einfach, sondern auch vergleichsweise kostengünstig darstellbar. Aufgrund der Variationsbreite der Substitutionsmuster der Liganden aren sowie der beiden DAD-Liganden R^{a}-N=CR¹-CR³=N-R^{b} (Glyoxal-Bis(imine)) und (R^{c},R^{d})N-N=CR^{H1}-CR^{H3}=N-N(R^{e},R^{f}) (Glyoxal-Bis(hydrazone)) können für verschiedene Anwendungen maßgeschneiderte Ruthenium(0)-Präkursoren zur Verfügung gestellt werden. Somit wird ein Portfolio von Ruthenium(0)-Komplexen bereitgestellt, aus dem eine passende Verbindung ausgewählt werden kann, und zwar entsprechend den Anforderungen des jeweiligen Abscheidungsprozesses an die Flüchtigkeit und den thermischen Abbau des Ruthenium(0)-Präkursors. Die Komplexe der allgemeinen Formel B weisen aufgrund des Vorhandenseins einer Hydrazon-Einheit und infolgedessen einer vergleichsweise labileren N-N-Einfachbindung - anstelle einer N-C-Einfachbindung wie im Falle der Verbindungen des Typs A - andere Eigenschaften auf als die jeweils analogen Verbindungen gemäß der allgemeinen Formel A. So besitzen einige Vertreter der Verbindungsklasse gemäß der allgemeinen Formel B vergleichsweise niedrigere Schmelzpunkte. Dadurch sind sie für die Anwendung als Ruthenium(0)-Präkursoren in einem Gasphasenabscheidungsprozess noch geeigneter. Beispielsweise zeigt die Verbindung [Ru(anisol)(*i*Pr-N=CH-CH=N-*i*Pr)] vom Typ A einen Schmelzpunkt bei 95,4 °C, während der Komplex [Ru(anisol)(Me₂N-N=CH-CH=N-NMe₂)] vom Typ B bereits bei 70,2 °C schmilzt. Damit unterscheiden sich diese beiden Verbindungen auch hinsichtlich ihres thermischen Abbaus.

In einer Ausführungsform sind Verbindungen gemäß der allgemeinen Formel A vorgesehen, wobei aren ausgewählt ist aus der Gruppe bestehend aus
- einkernigen und mehrkernigen Benzolderivaten, welche wenigstens einen Substituenten aufweisen,
   wobei die Substituenten unabhängig voneinander ausgewählt sind aus der Gruppe bestehend aus einem Halogenatom, einem Alkoxyrest, einem Alkylrest (C5 - C10) und einem Arylrest,
und
- einkernigen und mehrkernigen Heteroarenen.
Dabei sind die Benzolderivate und die Heteroarene beispielsweise ausgewählt aus der Gruppe bestehend aus Chlorbenzol, Brombenzol, Iodbenzol, Neopentylbenzol, Indol, Pyridin, Pyridinderivaten, Diazinen, Diazinderivaten, Triazinen und Triazinderivaten.

Eine andere Ausführungsform sieht Verbindungen gemäß der allgemeinen Formel A vor, wobei R¹ und R³ unabhängig voneinander ausgewählt sind aus der Gruppe bestehend aus H, einem Alkylrest (C1 - C10) und einem Arylrest und R^{a} = R^{b} = H, Alkylrest (C1 - C10) oder Arylrest ist. Dabei handelt es sich beispielsweise um die Verbindungen [Ru(anisol)(*i*Pr-N=CH-C(CH₃)=N-*i*Pr)], [Ru(anisol)(*i*Pr-N=CH-C(C₆H₅)=N-*i*Pr)], [Ru(anisot)(*i*Pr-N=CH-C(C₆H₁₁)=N-*i*Pr)], [Ru(*p*-cymol)(*i*Pr-N=CH-C(CH₃)=N-*i*Pr)], [Ru(*p-*cymol)(*i*Pr-N=CH-C(C₆H₆)=N-*i*Pr)] und [Ru(*p*-cymol)(*i*Pr-N=CH-C(C₆H₁₁)=N-*i*Pr)].

Eine weitere Ausführungsform sieht Verbindungen gemäß der allgemeinen Formel A vor, wobei R¹ = R³ = H, Alkylrest (C1 - C10) oder Arylrest und R^{a} = R^{b} = H, Alkylrest (C1 - C10) oder Arylrest ist. Beispiele für diese Verbindungen des Typs A sind [Ru(anisol)(*i*Pr-N=CH-CH=N-*i*Pr)], [Ru(anisol)(*i*Pr-N=C(CH₃)-C(CH₃)=N-*i*Pr)], [Ru(anisol)(*i*Pr-N=C(C₆H₅)-C(C₆H₅)=N-*i*Pr)], [Ru(anisol)(*i*Pr-N=C(C₆H₁₁)-C(C₆H₁₁)=N-*i*Pr)], [Ru(*p*-cymol)(*i*Pr-N=CH-CH=N-*i*Pr)], [Ru(*p*-cymol)(*i*Pr-N=C(CH₃)-C(CH₃)=N-*i*Pr)], [Ru(*p*-cymol)(*i*Pr-N=C(C₆H₆)-C(C₆H₅)=N-*i*Pr)] und [Ru(*p*-cymol)(*i*Pr-N=C(C₆H₁₁)-C(C₆H₁₁)=N-*i*Pr)].

In einer anderen Ausführungsform sind Verbindungen gemäß der allgemeinen Formel B vorgesehen, wobei
R^{H1}, R^{H3} unabhängig voneinander ausgewählt sind aus der Gruppe bestehend aus H, einem Alkylrest (C1 - C10) und einem Arylrest und
R^{c} = R^{e} = H, Alkylrest (C1 - C10) oder Arylrest und
R^{d} = R^{f} = H, Alkylrest (C1 - C10) oder Arylrest ist.
Beispiele für diese Komplexe des Typs B sind [Ru(anisol)((CH₃)HN-N=CH-C(CH₃)=N-NH(CH₃))], [Ru(anisol)((CH₃)HN-N=CH-C(C₆H₅)=N-NH(CH₃))], [Ru(anisol)((C₆Hₙ)HN-N=CH-C(CH₃)=N-NH(C₆H₁₁))], [Ru(*p*-cymol)((CH₃)HN-N=CH-C(CH₃)=N-NH(CH₃))], [Ru(p-cymol)((CH₃)HN-N=CH-C(C₆H₅)=N-NH(CH₃))] und [Ru(*p*-cymol)((C₆H₁₁)HN-N=CH-C(CH₃)=N-NH(C₆H₁₁))].

Eine weitere Variante sieht Verbindungen gemäß der allgemeinen Formel B vor, wobei R^{H1}, R^{H3} unabhängig voneinander ausgewählt sind aus der Gruppe bestehend aus H, einem Alkylrest (C1 - C10) und einem Arylrest und
R^{c} = R^{d} = R^{e} = R^{f} = H, Alkylrest (C1 - C10) oder Arylrest ist.
Zu diesen Verbindungen der Ruthenium(0)-Komplexe des Typs B zählen beispielsweise [Ru(anisol)((CH₃)₂N-N=CH-C(CH₃)=N-N(CH₃)₂)],[Ru(anisol)((C₅H₁₁)₂N-N=CH-C(CH₃)=N-N(C₅H₁₁)₂)], [Ru(anisol)((C₆H₁₁)₂N-N=CH-C(C₆H₅)=N-N(C₆H₁₁)₂)], [Ru(*p*-cymol)((CH₃)₂N-N=CH-C(CH₃)=N-N(CH₃)₂)], [Ru(*p*-cymol)((C₅H₁₁)₂N-N=CH-C(CH₃)=N-N(C₅H₁₁)₂)] und [Ru(*p*-cymol)((C₆H₁₁)₂N-N=CH-C(C₆H₅)=N-N(C₆H₁₁)₂)].

Eine noch andere Ausführungsform sieht Verbindungen gemäß der allgemeinen Formel B vor, wobei
R^{H1} = R^{H3} = H, Alkylrest (C1 - C10) oder Arylrest und
R^{c} = R^{e} = H, Alkylrest (C1 - C10) oder Arylrest und
R^{d} = R^{f} = H, Alkylrest (C1 - C10) oder Arylrest ist.
Beispiele für diese Komplexe des Typs B sind [Ru(anisol)((CH₃)HN-N=CH-CH=N-NH(CH₃))], [Ru(anisol)((C₆H₁₁)HN-N=C(CH₃)-C(CH₃)=N-NH(C₆H₁₁))], [Ru(anisol)((C₅H₁₁)(C₂H₅)N-N=C(C₆H₅)-C(C₆H₅)=N-N(C₂H₅)(C₅H₁₁))], [Ru(*p-*cymol)((CH₃)HN-N=CH-CH=N-NH(CH₃))], [Rᵤ(*p*-cymol)((C₆H₁₁)HN-N=C(CH₃)-C(CH₃)=N-NH(C₆H₁₁))] und [Ru(*p*-cymol)((C₅H₁₁)(C₂H₅)N-N=C(C₆H₅)-C(C₆H₅)=N-N(C₂H₅)(C₅H₁₁))].

In einer weiteren Ausführungsform sind Verbindungen gemäß der allgemeinen Formel B vorgesehen, wobei R^{H1} = R^{H3} = H, Alkylrest (C1 - C10) oder Arylrest und R^{c} = R^{d} = R^{e} = R^{f} = H, Alkylrest (C1 - C10) oder Arylrest ist. Dazu zählen beispielsweise die Ruthenium(0)-Komplexe [Ru(anisol)((CH₃)₂N-N=CH-CH=N-N(CH₃)₂)], [Ru(anisol)((C₆H₁₁)₂N-N=C(CH₃)-C(CH₃)=N-N(C₆H₁₁)₂)], [Ru(anisol)((C₅H₁₁)₂N-N=C(C₆H₅)-C(C₆H₅)=N-N(C₅H₁₁)₂)], [Ru(*p-*cymol)((CH₃)₂N-N=CH-CH=N-N(CH₃)₂)], [Ru(*p*-cymol)((C₆H₁₁)₂N-N=C(CH₃)-C(CH₃)=N-N(C₆H₁₁)₂)] und [Ru(*p*-cymol)((C₅H₁₁)₂N-N=C(C₆H₅)-C(C₆H₅)=N-N(C₅H₁₁)₂)].

Eine weitere Variante sieht Verbindungen gemäß der allgemeinen Formel A oder der allgemeinen Formel B vor, wobei einkernige oder mehrkernige Heteroarene ausgewählt sind aus der Gruppe bestehend aus Pyridin, Pyridinderivaten, Diazinen, Diazinderivaten, Triazinen und Triazinderivaten. Durch das Einführen von ein- und mehrkernigen *N*-Heterozyklen anstelle von ein- und mehrkernigen Arenen wird das Spektrum der Ruthenium(0)-Komplexe der Typen A und B deutlich erweitert.

Die Aufgabe wird weiterhin gelöst durch ein Verfahren zur Herstellung einer Verbindung gemäß der allgemeinen Formel [Ru(aren)X₂]₂ (C), wobei
- aren ausgewählt ist aus der Gruppe bestehend aus einkernigen und mehrkernigen Arenen und einkernigen und mehrkernigen Heteroarenen und
- X = Halogen
umfassend die Schritte:
a) Befüllen eines Autoklaven mit einer Mischung enthaltend
   - ein Cyclohexadien,
   - ein Ruthenium(III)-halogenid und
   - ein Lösungsmittel,
b) Erwärmen des Autoklaven auf eine Temperatur T.

Durch das Verwenden eines Autoklaven ist es vorteilhafterweise möglich, die Reaktion unter erhöhtem Druck durchzuführen. Dazu ist lediglich das Erwärmen des Autoklaven erforderlich.

In einer Ausführungsform des beanspruchten Verfahrens beträgt der Druck innerhalb des Autoklaven während der Reaktion zwischen 1,1 bar und 30 bar. Dadurch kann vorteilhafterweise die Reaktionszeit reduziert werden, wobei zudem eine Verbesserung der Ausbeute des Produktes [Ru(aren)X₂]₂ erzielt wird. Bei einem Druck von 5 bar innerhalb des Autoklaven, einer Temperatur des Autoklaven von 140 °C und einer Reaktionszeit von vier Stunden wird beispielsweise die Zielverbindung [Ru(anisol)Cl₂]₂ in einer Ausbeute von bis zu 37 % erhalten, wobei der Anteil des üblichen, unvermeidlich entstehenden Nebenproduktes [Ru(benzol)Cl₂]₂ bereits abgezogen wurde. Bennett und Smith berichten für diesen Ruthenium(II)-Komplex von einer Ausbeute in Höhe von 25 % bei einer Reaktionszeit von 30 Stunden unter Refluxbedingungen. Mit dem beanspruchten Verfahren werden aus (atom)ökonomischer und ökologischer Sicht zufriedenstellendere Ergebnisse erzielt. Das Produktgemisch aus [Ru(anisol)Cl₂]₂ und [Ru(benzol)Cl₂]₂ wird üblicherweise als Edukt für [Ru(anisol)Cl₂]₂ eingesetzt.

In einer Ausführungsform des Verfahrens ist das Cyclohexadien 1,3-Cyclohexadien, 1,4-Cyclohexadien, 1-Ethyl-1,4-cyclohexadien, 2-Methyl-5-(1-methylethyl)-1,3-cyclohexadien, 1,3,5-Trimethylcyclohexa-1,4-dien oder 1-Methoxycyclohexa-1,4-dien.

In einer weiteren Ausführungsform des Verfahrens ist das Ruthenium(III)-halogenid ein Ruthenium(III)-chlorid, ein Ruthenium(III)-bromid oder ein Ruthenium(III)-iodid. Die Ruthenium(III)-halogenide werden, sofern nicht anders kommerziell erhältlich, ohne vorherige Trocknung als RuX₃ x H₂O verwendet.

In einer anderen Ausführungsform des Verfahrens ist das Lösungsmittel ein polares Lösungsmittel. Das Lösungsmittel kann auch ein Lösungsmittelgemisch sein. Eine Variante des Verfahrens sieht vor, dass das Lösungsmittel ein Alkohol, Acetonitril, Aceton oder ein Ether ist. Der Alkohol ist beispielsweise ausgewählt aus der Gruppe bestehend aus Methanol, Ethanol, *iso*-Propanol, *n*-Butanol, *sec*-Butanol und *neo*-Pentanol.

In einer weiteren Variante des Verfahrens beträgt die Temperatur T des Autoklaven zwischen 50 °C und 250 °C. Dabei wird die Temperatur T so gewählt, dass sie maximal 10 °C unterhalb des Siedepunktes des eingesetzten Lösungsmittels liegt oder maximal 100 °C oberhalb des Siedepunktes des eingesetzten Lösungsmittels liegt.

Die Aufgabe wird ferner gelöst durch Verbindungen gemäß der allgemeinen Formel [Ru(aren)X₂]₂ (C), erhältlich nach einer Ausführungsform des weiter oben beschriebenen Verfahrens, wobei aren ausgewählt ist aus der Gruppe bestehend aus einkernigen und mehrkernigen Arenen und einkernigen und mehrkernigen Heteroarenen und X = Halogen. Diese µ-Cl-verbrückten Ruthenium(II)-Komplexe sind stabil und daher gut lagerbar. Sie eignen sich beispielsweise als Edukte für die Synthese halogenidfreier Ruthenium(0)-Komplexe.

In einer Ausführungsform der Verbindungen gemäß der allgemeinen Formel [Ru(aren)X₂]₂ (C), erhältlich nach einer Ausführungsform des weiter oben beschriebenen Verfahrens, ist vorgesehen, dass aren ausgewählt ist aus der Gruppe bestehend aus Benzol, Toluol, Ethylbenzol, *tert*-Butylbenzol, *sec*-Butylbenzol, Propylbenzol, Isopropylbenzol, Benzocyclopentan, 4-Ethyl-toluol, *ortho*-Xylol, *meta-*Xylol, *para-*Xylol, Chlorbenzol, Mesitylen, *para*-Cymol und Anisol.

Außerdem wird die Aufgabe gelöst durch die Verwendung einer Verbindung gemäß der allgemeinen Formel [Ru(aren)X₂]₂ (C), erhalten oder erhältlich nach einer Ausführungsform des weiter oben beschriebenen Verfahrens, als Präkursor zur Herstellung einer Ruthenium(0)-Verbindung. Bei der Verwendung handelt es sich beispielsweise um ein Verfahren zur Herstellung einer Verbindung gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B) unter Verwendung einer Verbindung gemäß der allgemeinen Formel [Ru(aren)X₂]₂ (C), erhalten oder erhältlich nach einer Ausführungsform des weiter oben beschriebenen Verfahrens, umfassend die Schritte:
a) Zurverfügungstellung einer Verbindung
   gemäß der allgemeinen Formel [Ru(aren)X₂]₂ (C),
   wobei
   - aren ausgewählt ist aus der Gruppe bestehend aus einkernigen und mehrkernigen Arenen und einkernigen und mehrkernigen Heteroarenen und
   - X = Halogen,
   und
b) Herstellung einer Verbindung gemäß der allgemeinen Formel
   [Ru(aren)(R^{a}-N=CR¹-CR³=N-R^{b})] (A)
   oder
   [Ru(aren)(R^{c},R^{d})N-N=CR^{H1}-CR^{H3}=N-N(R^{e},R^{f}))] (B),
   wobei
   - aren ausgewählt ist aus der Gruppe bestehend aus einkernigen und mehrkernigen Arenen und einkernigen und mehrkernigen Heteroarenen
      und
   - R¹, R³, R^{H1}, R^{H3}, R^{a}, R^{b}, R^{c}, R^{d}, R^{e} und R^{f} unabhängig voneinander ausgewählt sind aus der Gruppe bestehend aus H, einem Alkylrest (C1 - C10) und einem Arylrest,
   unter Verwendung einer Verbindung gemäß der allgemeinen Formel [Ru(aren)X₂]₂ (C), erhalten oder erhältlich nach einer Ausführungsform des weiter oben beschriebenen Verfahrens.

Dies ist besonders vorteilhaft, weil die Verbindungen des Typs C mit dem oben beschriebenen Verfahren einfach, kostengünstig und vergleichsweise besserer Ausbeute darstellbar sind. Dadurch ist ihre Verwendung im industriellen Maßstab möglich.

Die Aufgabe wird weiterhin gelöst durch ein Verfahren zur Herstellung einer Verbindung gemäß der allgemeinen Formel [Ru(aren)((R^{c},R^{d})N-N=CR^{H1}-CR^{H3}=N-N(R^{e},R^{f}))] (B), wobei
i) aren ausgewählt ist aus der Gruppe bestehend aus einkernigen und mehrkernigen Arenen und einkernigen und mehrkernigen Heteroarenen
   und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
umfassend die Schritte:
a) Zurverfügungstellung einer Verbindung
   gemäß der allgemeinen Formel [Ru(aren)X₂]₂ (C), wobei
   - X = Halogen und
   - aren ausgewählt ist aus der Gruppe bestehend aus einkernigen und mehrkernigen Arenen und einkernigen und mehrkernigen Heteroarenen,
b) Umsetzung von [Ru(aren)X₂]₂ mit M^{A}₂CO₃ oder M^{E}CO₃,
   wobei M^{A} = Alkalimetall und M^{B} = Erdalkalimetall, und
   einem Liganden gemäß der allgemeinen Formel (R^{c},R^{d})N-N=CR^{H1}-CR^{H3}=N-N(R^{e},R^{f}) in einem polaren Lösungsmittel.

Bei dem Lösungsmittel kann es sich auch um ein Lösungsmittelgemisch handeln.

Das beanspruchte Verfahren ermöglicht vorteilhafterweise die Darstellung der Zielverbindungen gemäß der allgemeinen Formel [Ru(aren)((R^{c},R^{d})N-N=CR^{H1}-CR^{H3}=N-N(R^{e},R^{f}))] (B) in einem zweistufigen Verfahren. Als Edukte werden - je nach Zielverbindung - die einfach und kostengünstig darstellbaren Verbindung [Ru(aren)X₂]₂ sowie das einfach und kostengünstig zugängliche Diazadien (R^{c},R^{d})N-N=CR^{H1}-CR^{H3}=N-N(R^{e},R^{f}) eingesetzt. Als Reduktionsmittel dient ein Alkalimetallcarbonat oder ein Erdalkalimetallcarbonat. Diese Salze sind relativ kostengünstig, und ihr Einsatz macht keine besonderen Sicherheitsmaßnahmen erforderlich. Somit kann auch vor diesem Hintergrund das beanspruchte Verfahren ohne Weiteres im industriellen Maßstab durchgeführt werden. Die Ruthenium(0)-Komplexe gemäß der allgemeinen Formel B werden mit dem beanspruchten Verfahren in guten Ausbeuten und hoher Reinheit erhalten, was insbesondere mit Blick auf einen industriellen Einsatz dieser Verbindungen vorteilhaft ist.

Insgesamt werden mit dem beanspruchten Verfahren die Nachteile des Standes der Technik überwunden. Insbesondere sind mit dem Verfahren Ruthenium(0)-Komplexe darstellbar, welche vergleichsweise niedrige Schmelzpunkte aufweisen und sich damit besonders für den Einsatz als Ruthenium(0)-Präkursoren in Gasphasenabscheidungsverfahren oder Atomlagenabscheidungsverfahren eignen. Das Verfahren zeichnet sich durch eine besonders einfache und kostengünstige Verfahrensführung aus, weil es sich um einen zweistufigen Prozess handelt, welcher ohne besonderen präparativen Aufwand, d. h. mittels Standardmethoden, durchführbar ist und von einfach und vergleichsweise kostengünstig zugänglichen Edukten ausgeht. Die Aufreinigung umfasst nur einfache Schritte, wie z. B. Filtration oder Sublimation bei vergleichsweise niedrigen Temperaturen. Daher werden die gewünschten Ruthenium(0)-Verbindungen gemäß der allgemeinen Formel B, wie z. B. [Ru(anisol)((CH₃)₂N-N=CH-CH=N-N(CH₃)₂)], reproduzierbar in hoher Reinheit erhalten. Insbesondere erfüllt die Reinheit der darstellbaren Ruthenium(II)-Komplexe die Anforderungen an Ruthenium(0)-Präkursoren zur Herstellung von Ruthenium-Schichten und Ruthenium enthaltenden Schichten. Die Ausbeuten sind gut und reproduzierbar. Darüber hinaus kann das Verfahren auch im industriellen Maßstab durchgeführt werden, wobei vergleichbare Ausbeuten und Reinheit der Zielverbindungen erreicht werden. Das beanspruchte Verfahren ist vergleichsweise zeit- und kostensparend.

In einer Ausführungsform des Verfahrens werden in Schritt b) [Ru(aren)X₂]₂ und M^{A}₂CO₃ oder M^{E}CO₃ vorgelegt und anschließend ein Lösungsmittel und ein Ligand gemäß der allgemeinen Formel (R^{c},R^{d})N-N=CR^{H1}-CR^{H3}=N-N(R^{e},R^{f}) hinzugefügt.

In einer weiteren Ausführungsform des Verfahrens wird M^{A}₂CO₃, wobei M^{A} = Li, Na oder K, oder M^{E}CO₃, wobei M^{E} = Mg, Ca, Sr oder Ba, eingesetzt. Diese Reduktionsmittel sind kommerziell in großen Mengen und relativ kostengünstig verfügbar. Zudem sind sie unter Sicherheitsaspekten als vergleichsweise unbedenkliche Reduktionsmittel einzustufen.

In einer anderen Variante des Verfahrens beträgt das molare Verhältnis [Ru(aren)X₂]₂: M^{A}₂CO₃ oder [Ru(aren)X₂]₂: M^{E}CO₃ zwischen 1 : 2 und 1 : 10. In einer noch anderen Ausführungsform wird ein molares Verhältnis zwischen 1 : 2,1 und 1 : 8 gewählt.

In einer weiteren Ausführungsform des Verfahrens beträgt das molare Verhältnis [Ru(aren)X₂]₂: (R^{c},R^{d})N-N=CR^{H1}-CR^{H3}=N-N(R^{e},R^{f}) zwischen 1 : 2 und 1 : 10. In einer anderen Variante des Verfahrens beträgt das molare Verhältnis zwischen 1 : 2,1 und 1 : 6.

In einer anderen Ausführungsvariante des Verfahrens ist das Lösungsmittel ein Alkohol, ein Ether, Acetonitril oder Aceton. In einer noch anderen Ausführungsform ist das Lösungsmittel Methanol, Ethanol, *iso*-Propanol, *n*-Butanol, *sec*-Butanol, *neo*-Pentanol, Tetrahydrofuran, Dimethylether, Diethylether, Methyl-*tert*-butylether, 1,4-Dioxan, Acetonitril oder Aceton.

In einer weiteren Ausführungsform des Verfahrens wird das Reaktionsgemisch aus Schritt b) erwärmt, wobei eine Temperatur T₁ des Reaktionsgemisches zwischen 20 °C und 160 °C beträgt. Eine weitere Variante des Verfahrens sieht vor, dass das Reaktionsgemisch umfassend [Ru(aren)X₂]₂, ein Alkalimetall- oder Erdalkalimetallcarbonat, ein Lösungsmittel und einen Liganden gemäß der allgemeinen Formel (R^{c},R^{d})N-N=CR^{H1}-CR^{H3}=N-N(R^{e},R^{f}) unter Refluxbedingungen erhitzt wird. Dabei hängt die Reaktionsdauer bei dieser Temperatur T₁ von der Zusammensetzung des Reaktionsgemisches ab. In *iso*-Propanol wird das Verfahren in vielen Fällen unter Refluxbedingungen für acht bis 16 Stunden durchgeführt.

In einer weiteren Variante des Verfahrens wird nach Schritt b) ein Schritt c) durchgeführt, welcher eine Isolierung von [Ru(aren)((R^{c},R^{d})N-N=CR^{H1}-CR^{H3}=N-N(R^{e},R^{f}))] (B) umfasst. Die Isolierung kann einen oder mehrere Verfahrensschritte umfassen, wie z. B. die Reduzierung des Lösungsmittelvolumens, d. h. Einengen, z. B. mittels "bulb-to-bulb", die Zugabe eines Lösungsmittels und/oder einen Lösungsmittelaustausch, um Verunreinigungen und/oder Edukte zu entfernen, eine Destillation, eine Sublimation, Waschen und/oder Trocknen des Produktes. Es können auch mehrere Filtrationsschritte vorgesehen sein, gegebenenfalls auch eine oder mehrere Filtrationen über einem Reinigungsmedium, wie z. B. Aktivkohle oder Silica, z. B. Celite®. Eine weitere Umsetzung der Zielverbindungen gemäß der allgemeinen Formel B *in situ,* d. h. ohne vorherige Isolierung, ist ebenfalls möglich.

Die Aufgabe wird außerdem gelöst durch Verbindungen gemäß der allgemeinen Formel [Ru(aren)(R^{c},R^{d})N-N=CR^{H1}-CR^{H3}=N-N(R^{e},R^{f}))] (B), wobei
i) aren ausgewählt ist aus der Gruppe bestehend aus einkernigen und mehrkernigen Arenen und einkernigen und mehrkernigen Heteroarenen
   und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
erhältlich nach einer Ausführungsform des weiter oben beschriebenen Verfahrens.

Dabei umfasst die allgemeine Formel B sowohl die Monomere als auch etwaige Oligomere.

Die Alkyl- und/oder Arylreste R^{H1}, R^{H3} und R^{c} - R^{f} können substituiert sein, beispielsweise teilweise fluoriert oder perfluoriert. Die einkernigen und mehrkernigen Arene und die einkernigen und mehrkernigen Heteroarene können ebenfalls substituiert sein.

Beispiele für die Alkyl- und Arylreste R^{H1}, R^{H3} und R^{c} - R^{f} sind CH₃, C₂H₅, *n*Pr, *i*Pr, *n*Bu, *t*Bu, *s*Bu, *i*Bu, CH₂*s*Bu, CH₂*i*Bu, CH(CH₃)(*i*Pr), CH(CH₃)(*n*Pr), CH(C₂H₅)₂, C(CH₃)₂(C₂H₅), C₆H₁₁ und C₆H₆.

Die beanspruchten Verbindungen des Typs [Ru(aren)((R^{c},R^{d})N-N=CR^{H1}-CR^{H3}=N-N(R^{e},R^{f}))] (B), erhältlich nach einer Ausführungsform des weiter oben beschriebenen Verfahrens, sind reproduzierbar in guten Ausbeuten und hoher Reinheit darstellbar. Sie eignen sich somit als Ruthenium(0)-Präkursoren für die Abscheidung von Ruthenium-Schichten oder Ruthenium enthaltenden Schichten auf einer Oberfläche eines Substrats, auch im großtechnischen Maßstab. Die Ruthenium(0)-Komplexe sind ausgehend von Ruthenium(II)-Präkursoren des Typs [Ru(aren)X₂]₂ in einer einfachen Zweistufensynthese darstellbar und lassen sich einfach, z. B. destillativ oder sublimativ bei relativ niedrigen Temperaturen aufreinigen. Dies ist besonders vorteilhaft, weil ihre Synthese und Reinigung mit einfachen Standardmethoden erfolgen kann, d. h. ohne großen präparativen Aufwand möglich ist. Somit sind die beanspruchten Ruthenium(0)-Komplexe nicht nur einfach, sondern auch vergleichsweise kostengünstig darstellbar. Aufgrund der Variationsbreite der Substitutionsmuster der Liganden aren sowie des DAD-Liganden (R^{c},R^{d})N-N=CR^{H1}-CR^{H3}=N-N(R^{e},R^{f}) (Bis(hydrazon)glyoxale) können für verschiedene Anwendungen maßgeschneiderte Ruthenium(0)-Präkursoren zur Verfügung gestellt werden. Somit wird ein Portfolio von Ruthenium(0)-Komplexen bereitgestellt, aus dem eine passende Verbindung ausgewählt werden kann, und zwar entsprechend den Anforderungen des jeweiligen Abscheidungsprozesses an die Flüchtigkeit und den thermischen Abbau des Ruthenium(0)-Präkursors. Einige Komplexe der allgemeinen Formel B besitzen aufgrund des Vorhandenseins einer Hydrazon-Einheit und infolgedessen einer vergleichsweise labileren N-N-Einfachbindung - anstelle einer N-C-Einfachbindung wie im Falle der Verbindungen des bekannten Typs [Ru(aren)(R^{a}-N=CR¹-CR³=N-R^{b})] (A) - vergleichsweise niedrigere Schmelzpunkte. Dadurch sind sie für die Anwendung als Ruthenium(0)-Präkursoren in einem Gasphasenabscheidungsprozess noch geeigneter. Beispielsweise zeigt die Verbindung [Ru(anisol)(*i*Pr-N=CH-CH=N-*i*Pr)] vom Typ A einen Schmelzpunkt bei 95,4 °C, während der Komplex [Ru(anisol)(Me₂N-N=CH-CH=N-NMe₂)] vom Typ B bereits bei 70,2 °C schmilzt. Damit unterscheiden sich diese beiden Verbindungen auch hinsichtlich ihres thermischen Abbaus.

In einer Ausführungsform der Verbindungen, erhältlich nach einer Ausführungsform des weiter oben beschriebenen Verfahrens, ist aren ausgewählt aus der Gruppe bestehend aus Benzol, Toluol, Ethylbenzol, *tert*-Butylbenzol, *sec*-Butylbenzol, Propylbenzol, Isopropylbenzol, Benzocyclopentan, 4-Ethyl-toluol, *ortho*-Xylol, *meta*-Xylol, *para*-Xylol, Chlorbenzol, Mesitylen, *para*-Cymol, Anisol, Pyridin, Pyridinderivaten, Diazinen, Diazinderivaten, Triazinen und Triazinderivaten.

Die Aufgabe wird weiterhin gelöst durch ein Verfahren zur Herstellung einer Verbindung
▪ gemäß der allgemeinen Formel [Ru(aren)(R^{a}-N=CR¹-CR³=N-R^{b})] (A), wobei
   i) aren ausgewählt ist aus der Gruppe bestehend aus einkernigen und mehrkernigen Arenen und einkernigen und mehrkernigen Heteroarenen
      und
   ii) R¹, R³, R^{a} und R^{b} unabhängig voneinander ausgewählt sind aus der Gruppe bestehend aus H, einem Alkylrest (C1 - C10) und einem Arylrest
   oder
▪ gemäß der allgemeinen Formel [Ru(aren)((R^{c},R^{d})N-N=CR^{H1}-CR^{H3}=N-N(R^{e},R^{f}))] (B), wobei
   i) aren ausgewählt ist aus der Gruppe bestehend aus einkernigen und mehrkernigen Arenen und einkernigen und mehrkernigen Heteroarenen
      und
   ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
umfassend die Schritte:
a) Zurverfügungstellung einer Verbindung
   gemäß der allgemeinen Formel [Ru(aren)X₂]₂ (C), wobei
   - X = Halogen und
   - aren ausgewählt ist aus der Gruppe bestehend aus einkernigen und mehrkernigen Arenen und einkernigen und mehrkernigen Heteroarenen,
b) Umsetzung von [Ru(aren)X₂]₂ mit Zink und einem Liganden gemäß der allgemeinen Formel R^{a}-N=CR¹-CR³=N-R^{b} oder (R^{c},R^{d})N-N=CR^{H1}-CR^{H3}=N-N(R^{e},R^{f})
   in einem aprotischen Lösungsmittel.

Bei dem Lösungsmittel kann es sich auch um ein Lösungsmittelgemisch handeln.

Das beanspruchte Verfahren ermöglicht vorteilhafterweise die Darstellung der Zielverbindungen gemäß der allgemeinen Formel [Ru(aren)(R^{a}-N=CR¹-CR³=N-R^{b})] (A) oder gemäß der allgemeinen Formel [Ru(aren)((R^{c},R^{d})N-N=CR^{H1}-CR^{H3}=N-N(R^{e},R^{f}))] (B) in einem zweistufigen Verfahren. Als Edukte werden - je nach Zielverbindung - die einfach und kostengünstig darstellbaren Verbindungen [Ru(aren)X₂]₂ sowie das einfach und kostengünstig zugängliche Diazadien R^{a}-N=CR¹-CR³=N-R^{b} oder (R^{c},R^{d})N-N=CR^{H1}-CR^{H3}=N-N(R^{e},R^{f}) eingesetzt. Als Reduktionsmittel dient elementares Zink. Dies ist besonders vorteilhaft, weil Zink zum einen vergleichsweise kostengünstig ist und zum anderen der Einsatz von Zink keine besonderen Sicherheitsmaßnahmen erfordert. Somit kann auch vor diesem Hintergrund das beanspruchte Verfahren ohne Weiteres im industriellen Maßstab durchgeführt werden. Zudem lässt sich gegebenenfalls überschüssiges elementares Zink durch einfache Filtration abtrennen, sodass die jeweilige Zielverbindung keine metallischen Verunreinigungen aufweist, welche ihre Eigenschaften in nicht kontrollierbarer und zum Teil irreversibler Weise verändern bzw. verschlechtern. Außerdem werden die Ruthenium(0)-Komplexe gemäß der allgemeinen Formeln A und B mit dem beanspruchten Verfahren in guten Ausbeuten und hoher Reinheit erhalten, was insbesondere mit Blick auf einen industriellen Einsatz dieser Verbindungen vorteilhaft ist.

Es wurde festgestellt, dass beispielsweise im Falle der Synthesen von [Ru(*p*-cymol)(*i*Pr-N=CH-CH=N-*i*Pr)] (Typ A) und [Ru(*p*-cymol)((CH₃)₂N-N=CH-CH=N-N(CH₃)₂)] (Typ B) ein schwierig abtrennbares Nebenprodukt entsteht, sofern K₂CO₃ als Reduktionsmittel in *i*PrOH eingesetzt wird und das Reaktionsgemisch für 16 Stunden unter Refluxbedingungen erhitzt wird. Im Unterschied dazu ist die Herstellung dieser Verbindungen in Reinform mit dem hier beanspruchten Verfahren, bei welchem Zink als Reduktionsmittel fungiert, vergleichsweise einfach möglich.

Als Reduktionsmittel kann alternativ ein anderes Reduktionsmittel eingesetzt werden, wie z. B. Kaliumgraphit (KC₈).

Insgesamt werden mit dem beanspruchten Verfahren die Nachteile des Standes der Technik überwunden. Dabei fallen insbesondere keine Salzfrachten, wie z. B. LiCl, NaCl oder KCl, an, deren Abtrennung sich je nach Lösungsmittel schwierig gestaltet. Das Verfahren zeichnet sich durch eine besonders einfache und kostengünstige Verfahrensführung aus, weil es sich um einen zweistufigen Prozess handelt, welcher unter vergleichsweise milden Reaktionsbedingungen durchführbar ist und von einfach und vergleichsweise kostengünstig zugänglichen Edukten ausgeht. Zudem sind wenige und präparativ einfach zu bewerkstelligende Verfahrensschritte notwendig. Es entstehen nur Nebenprodukte, welche auf einfache Weise quantitativ abtrennbar sind. Daher wird die gewünschte Ruthenium(0)-Verbindung gemäß der allgemeinen Formel A oder B reproduzierbar durch standardmäßige Aufreinigungsmethoden in hoher Reinheit erhalten. Insbesondere erfüllt die Reinheit der darstellbaren Ruthenium(II)-Komplexe die Anforderungen an Ruthenium(0)-Präkursoren zur Herstellung von Ruthenium-Schichten und Ruthenium enthaltenden Schichten. Die Ausbeuten sind gut und reproduzierbar. Darüber hinaus kann das Verfahren auch im industriellen Maßstab durchgeführt werden, wobei vergleichbare Ausbeuten und Reinheit der Zielverbindungen erreicht werden. Das beanspruchte Verfahren ist vergleichsweise zeit-, energie- und kostensparend. Insgesamt ist es aus (atom)ökonomischer und ökologischer Sicht als zufriedenstellend einzustufen.

In einer Ausführungsform des Verfahrens werden in Schritt b) [Ru(aren)X₂]₂ und Zink vorgelegt und anschließend ein Lösungsmittel und ein Ligand gemäß der allgemeinen Formel R^{a}-N=CR¹-CR³=N-R^{b} oder (R^{c},R^{d})N-N=CR^{H1}-CR^{H3}=N-N(R^{e},R^{f}) hinzugefügt.

In einer anderen Ausführungsform des Verfahrens wird Zink in Form eines Pulvers und/oder in Form von Zinkgranalien hinzugefügt. Zink ist vergleichsweise kostengünstig und unter Sicherheitsaspekten als vergleichsweise unbedenkliches Reduktionsmittel einzustufen. Die Abtrennung von gegebenenfalls überschüssigem Zink ist vorteilhafterweise durch einfache Filtration, z. B. über Celite®, möglich. Besonders einfach ist die Abtrennung im Falle von Zinkgranalien, und zwar unabhängig von ihrer Korngröße.

In einer weiteren Variante des Verfahrens beträgt das molare Verhältnis [Ru(aren)X₂]₂ : Zn zwischen 1 : 2 und 1 : 10. In einer anderen Variante des Verfahrens wird ein Verhältnis zwischen 1 : 2,1 und 1 : 6 gewählt.

In einer anderen Ausführungsform des Verfahrens beträgt das molare Verhältnis [Ru(aren)X₂]₂: R^{a}-N=CR¹-CR³=N-R^{b} oder [Ru(aren)X₂]₂ : (R^{c},R^{d})N-N=CR^{H1}-CR^{H3}=N-N(R^{e},R^{f}) zwischen 1 : 2 und 1 : 10. In einer weiteren Variante des Verfahrens wird ein Verhältnis zwischen 1 : 2,1 und 1 : 6 gewählt. Weil das Zn²⁺-Kation des als Nebenprodukt anfallenden Zink(II)-chlorids vermutlich ebenfalls von den DAD-Liganden komplexiert wird, ist es - je nach Wahl der übrigen Reaktionsbedingungen - gegebenenfalls erforderlich, ein nichtstöchiometrisches molares Verhältnis [Ru(aren)X₂]₂ : R^{a}-N=CR¹-CR³=N-R^{b} oder [Ru(aren)X₂]₂: (R^{c},R^{d})N-N=CR^{H1}-CR^{H3}=N-N(R^{e},R^{f}) zu wählen. Die DAD-Liganden lösen sich in üblichen organischen Lösungsmitteln, sodass das Entfernen eines gegebenenfalls vorhandenen Überschusses einfach und rasch möglich ist.

Eine weitere Variante des Verfahrens sieht vor, dass das Lösungsmittel ein Ether, ein Benzolderivat, Acetonitril oder Aceton ist. In einer anderen Ausführungsform ist das Lösungsmittel Tetrahydrofuran, Dimethylether, Diethylether, Methyl-*tert*-butylether, 1,4-Dioxan, Toluol, Xylol, Acetonitril oder Aceton. Das Lösungsmittel kann jeweils auch ein Lösungsmittelgemisch sein.

In einer anderen Ausführungsform des Verfahrens wird das Reaktionsgemisch aus Schritt b) erwärmt, wobei eine Temperatur T₂ des Reaktionsgemisches zwischen 20 °C und 140 °C beträgt. Eine weitere Variante des Verfahren sieht vor, dass das Reaktionsgemisch umfassend [Ru(aren)X₂]₂, Zink, ein Lösungsmittel und einen Liganden gemäß der allgemeinen Formel R^{a}-N=CR¹-CR³=N-R^{b} oder (R^{c},R^{d})N-N=CR^{H1}-CR^{H3}=N-N(R^{e},R^{f}) auf eine Temperatur T_{R} erwärmt wird. Dabei wird die Temperatur T_{R} so gewählt, dass sie maximal 10 °C unterhalb eines Siedepunktes des Lösungsmittels liegt oder maximal 50 °C oberhalb des Siedepunktes des Lösungsmittels liegt. In Tetrahydrofuran wird das Verfahren in vielen Fällen bei 60 °C für fünf Stunden durchgeführt. Die Reaktionsdauer bei der Temperatur T₂ bzw. bei der Temperatur T_{R} ist abhängig von der Zusammensetzung des jeweiligen Reaktionsgemisches.

Eine weitere Variante des Verfahrens sieht vor, dass nach Schritt b) ein Schritt c) durchgeführt wird, welcher eine Isolierung von [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B) umfasst. Die Isolierung kann einen oder mehrere Verfahrensschritte umfassen, wie z. B. die Reduzierung des Lösungsmittelvolumens, d. h. Einengen, z. B. mittels "bulb-to-bulb", die Zugabe eines Lösungsmittels und/oder einen Lösungsmittelaustausch, um Verunreinigungen und/oder Edukte zu entfernen, eine Destillation, eine Sublimation, Waschen und/oder Trocknen des Produktes. Es können auch mehrere Filtrationsschritte vorgesehen sein, gegebenenfalls auch eine oder mehrere Filtrationen über einem Reinigungsmedium, wie z. B. Aktivkohle oder Silica, z. B. Celite®. Eine weitere Umsetzung der Zielverbindungen gemäß der allgemeinen Formel A oder B *in situ,* d. h. ohne vorherige Isolierung, ist ebenfalls möglich.

Gelöst wird die Aufgabe außerdem durch Verbindungen gemäß der allgemeinen Formel
▪ [Ru(aren)(R^{a}-N=CR¹-CR³=N-R^{b})] (A), wobei
   i) aren ausgewählt ist aus der Gruppe bestehend aus einkernigen und mehrkernigen Arenen und einkernigen und mehrkernigen Heteroarenen
      und
   ii) R¹, R³, R^{a} und R^{b} unabhängig voneinander ausgewählt sind aus der Gruppe bestehend aus H, einem Alkylrest (C1 - C10) und einem Arylrest
   oder
▪ [Ru(aren)((R^{c},R^{d})N-N=CR^{H1}-CR^{H3}=N-N(R^{e},R^{f}))] (B), wobei
   i) aren ausgewählt ist aus der Gruppe bestehend aus einkernigen und mehrkernigen Arenen und einkernigen und mehrkernigen Heteroarenen
      und
   ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
   erhältlich nach einer Ausführungsform des weiter oben beschriebenen Verfahrens.

Dabei umfassen die allgemeinen Formeln A und B sowohl die Monomere als auch etwaige Oligomere.

Die Alkyl- und/oder Arylreste R¹, R³, R^{H1}, R^{H3} und R^{a} - R^{f} können substituiert sein, beispielsweise teilweise fluoriert oder perfluoriert. Die einkernigen und mehrkernigen Arene und die einkernigen und mehrkernigen Heteroarene können ebenfalls substituiert sein.

Beispiele für die Alkyl- und Arylreste R¹, R³, R^{H1}, R^{H3} und R^{a} - R^{f} sind CH₃, C₂H₅, *n*Pr, *i*Pr, *n*Bu, *t*Bu, *s*Bu, *i*Bu, CH₂*s*Bu, CH₂*i*Bu, CH(CH₃)(*i*Pr), CH(CH₃)(*n*Pr), CH(C₂H₅)₂, C(CH₃)₂(C₂H₅), C₆H₁₁ und C₆H₆.

Die beanspruchten Verbindungen des Typs [Ru(aren)(R^{a}-N=CR¹-CR³=N-R^{b})] (A) und des Typs [Ru(aren)((R^{c},R^{d})N-N=CR^{H1}-CR^{H3}=N-N(R^{e},R^{f}))] (B), erhältlich nach einer Ausführungsform des weiter oben beschriebenen Verfahrens, sind reproduzierbar in guten Ausbeuten und hoher Reinheit darstellbar. Sie eignen sich somit als Ruthenium(0)-Präkursoren für die Abscheidung von Ruthenium-Schichten oder Ruthenium enthaltenden Schichten auf einer Oberfläche eines Substrats, auch im großtechnischen Maßstab. Die Ruthenium(0)-Komplexe sind ausgehend von Ruthenium(II)-Präkursoren des Typs [Ru(aren)X₂]₂ in einer einfachen Zweistufensynthese darstellbar, wobei anfallende Nebenprodukte auf einfach Weise quantitativ abtrennbar sind. Besonders vorteilhaft ist, dass sowohl ihre Synthese als auch ihre Reinigung mit einfachen Standardmethoden erfolgen kann, d. h. ohne großen präparativen Aufwand möglich ist. Somit sind die beanspruchten Ruthenium(0)-Komplexe nicht nur einfach, sondern auch vergleichsweise kostengünstig darstellbar. Aufgrund der Variationsbreite der Substitutionsmuster der Liganden aren sowie der beiden DAD-Liganden R^{a}-N=CR¹-CR³=N-R^{b} (Glyoxal-Bis(imine)) und (R^{c},R^{d})N-N=CR^{H1}-CR^{H3}=N-N(R^{e},R^{f}) (Glyoxal-Bis(hydrazone)) können für verschiedene Anwendungen maßgeschneiderte Ruthenium(0)-Präkursoren zur Verfügung gestellt werden. Somit wird ein Portfolio von Ruthenium(0)-Komplexen bereitgestellt, aus dem eine passende Verbindung ausgewählt werden kann, und zwar entsprechend den Anforderungen des jeweiligen Abscheidungsprozesses an die Flüchtigkeit und den thermischen Abbau des Ruthenium(0)-Präkursors. Die Komplexe der allgemeinen Formel B weisen aufgrund des Vorhandenseins einer Hydrazon-Einheit und infolgedessen einer vergleichsweise labileren N-N-Einfachbindung - anstelle einer N-C-Einfachbindung wie im Falle der Verbindungen des Typs A - andere Eigenschaften auf als die jeweils analogen Verbindungen gemäß der allgemeinen Formel A. So besitzen einige Vertreter der Verbindungsklasse gemäß der allgemeinen Formel B vergleichsweise niedrigere Schmelzpunkte. Dadurch sind sie für die Anwendung als Ruthenium(0)-Präkursoren in einem Gasphasenabscheidungsprozess noch geeigneter. Beispielsweise zeigt die Verbindung [Ru(benzol)(*i*Pr-N=CH-CH=N-*i*Pr)] vom Typ A einen Schmelzpunkt bei 106,7 °C, während der Komplex [Ru(benzol)(Me₂N-N=CH-CH=N-NMe₂)] vom Typ B bereits bei 86,5 °C schmilzt. Damit unterscheiden sich diese beiden Verbindungen auch hinsichtlich ihres thermischen Abbaus.

In einer Ausführungsform der Verbindungen gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B), erhältlich nach einer Ausführungsform des weiter oben beschriebenen Verfahrens, ist vorgesehen, dass aren ausgewählt ist aus der Gruppe bestehend aus Benzol, Toluol, Ethylbenzol, *tert-*Butylbenzol, *sec*-Butylbenzol, Propylbenzol, Isopropylbenzol, Benzocyclopentan, 4-Ethyl-toluol, *ortho*-Xylol, *meta*-Xylol, *para*-Xylol, Chlorbenzol, Mesitylen, *para*-Cymol, Anisol, Pyridin, Pyridinderivaten, Diazinen, Diazinderivaten, Triazinen und Triazinderivaten.

Des Weiteren wird die Aufgabe gelöst durch die Verwendung einer Ausführungsform der weiter oben beschriebenen Verbindungen gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B) oder einer Verbindung gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B), erhalten oder erhältlich nach einer Ausführungsform eines der weiter oben beschriebenen Verfahren, zur Abscheidung einer Ruthenium-Schicht oder einer Ruthenium enthaltenden Schicht auf einer Oberfläche eines Substrats. In einer Variante der Verwendung ist vorgesehen, dass die Abscheidung mittels eines Gasphasenabscheidungsverfahrens oder mittels eines Atomlagenabscheidungsverfahrens erfolgt. Bei der vorgenannten Verwendung einer Verbindung gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B) handelt es sich um ein Verfahren zur Herstellung eines Substrats, welches auf einer Oberfläche eine Ruthenium-Schicht oder eine Ruthenium enthaltende Schicht aufweist, umfassend die Schritte:
a) Zurverfügungstellung einer Verbindung gemäß der allgemeinen Formel
   ▪ [Ru(aren)(R^{a}-N=CR¹-CR³=N-R^{b})] (A), wobei
      i) aren ausgewählt ist aus der Gruppe bestehend aus einkernigen und mehrkernigen Arenen und einkernigen und mehrkernigen Heteroarenen
         und
      ii) R¹, R³, R^{a} und R^{b} unabhängig voneinander ausgewählt sind aus der Gruppe bestehend aus H, einem Alkylrest (C1 - C10) und einem Arylrest
         - nach einer Ausführungsform der weiter oben beschriebenen Verbindungen gemäß der allgemeinen Formel A
            oder
         - erhalten oder erhältlich nach einer Ausführungsform des weiter oben beschriebenen Verfahrens
      oder
   ▪ [Ru(aren)((R^{c},R^{d})N-N=CR^{H1}-CR^{H3}=N-N(R^{e},R^{f}))] (B), wobei
      i) aren ausgewählt ist aus der Gruppe bestehend aus einkernigen und mehrkernigen Arenen und einkernigen und mehrkernigen Heteroarenen
         und
      ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
         - nach einer Ausführungsform der weiter oben beschriebenen Verbindungen gemäß der allgemeinen Formel B
            oder
         - erhalten oder erhältlich nach einer Ausführungsform eines der weiter oben beschriebenen Verfahren,
b) Abscheidung einer Ruthenium-Schicht oder einer Ruthenium enthaltenden Schicht auf einer Oberfläche des Substrats unter Verwendung einer Verbindung gemäß
   der allgemeinen Formel

   [Ru(aren)(R^{a}-N=CR¹-CR³=N-R^{b})] (A)

   oder

   [Ru(aren)(R^{c},R^{d})N-N=CR^{H1}-CR^{H3}=N-N(R^{e},R^{f}))] (B)

   .

Der Begriff Schicht ist gleichbedeutend mit dem Ausdruck Film und trifft keine Aussage über die Schichtdicke oder die Filmdicke. Als Substrat können z. B. Korundfolien oder dünne metallische Folien eingesetzt werden. Das Substrat kann selbst Teil eines Bauteils sein.

In einer Ausführungsform des Verfahrens erfolgt die Abscheidung der Ruthenium-Schicht oder der Ruthenium enthaltenden Schicht mittels eines Gasphasenabscheidungsverfahrens oder mittels eines Atomlagenabscheidungsverfahren. Alternativ kann ein Sol-Gel-Verfahren angewendet werden, wobei das Sol beispielsweise mittels Spin- oder Dipcoating auf dem Substrat abgeschieden wird. Die Ruthenium(0)-Komplexe der allgemeinen Formeln A und B sind aufgrund ihrer hohen Reinheit besonders gut als Ruthenium(0)-Präkursoren geeignet. Zudem sind sie besonders einfach und vergleichsweise kostengünstig darstellbar, was ihre Verwendung im großtechnischen Maßstab ermöglicht.

In einer Ausführungsform der Verwendung einer Verbindung gemäß der allgemeinem Formel A oder B bzw. des Verfahrens zur Herstellung eines Substrats, welches auf einer Oberfläche eine Ruthenium-Schicht oder eine Ruthenium enthaltende Schicht aufweist, ist das Substrat ein Wafer. Der Wafer kann Silicium, Siliciumcarbid, Germanium, Galliumarsenid, Indiumphosphid, ein Glas, wie z. B. SiO₂, und/oder einen Kunststoff, wie z. B. Silikon, umfassen oder vollständig aus einem oder mehreren dieser Materialien bestehen. Zudem kann der Wafer eine oder mehrere Waferschichten mit jeweils einer Oberfläche aufweisen. Die Abscheidung der Ruthenium-Schicht oder der Ruthenium enthaltenden Schicht kann auf der Oberfläche einer oder mehrerer Waferschichten vorgesehen sein. Bei Verwendung einer Verbindung der allgemeinen Formel A oder B werden bei vergleichsweise geringem Materialeinsatz elementare Ruthenium-Schichten oder Ruthenium enthaltende Schichten in hoher Reinheit erhalten.

Die Aufgabe wird ferner gelöst durch ein Substrat, welches auf einer Oberfläche eine Ruthenium-Schicht oder eine Ruthenium enthaltende Schicht aufweist. Dabei ist die Ruthenium-Schicht oder die Ruthenium enthaltende Schicht herstellbar unter Verwendung einer Ausführungsform der weiter oben beschriebenen Verbindungen gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B) oder einer Verbindung gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B), erhalten oder erhältlich nach einer Ausführungsform eines der weiter oben beschriebenen Verfahren.

In einer Ausführungsform ist das Substrat ein Wafer. Der Wafer kann Silicium, Siliciumcarbid, Germanium, Galliumarsenid, Indiumphosphid, ein Glas, wie z. B. SiO₂, und/oder einen Kunststoff, wie z. B. Silikon, umfassen oder vollständig aus einem oder mehreren dieser Materialien bestehen. Zudem kann der Wafer eine oder mehrere Waferschichten mit jeweils einer Oberfläche aufweisen. Dabei können eine oder mehrere Oberflächen eine Ruthenium-Schicht oder eine Ruthenium enthaltende Schicht aufweisen.

Ferner wird die Aufgabe gelöst durch die Verwendung einer Ausführungsform der weiter oben beschriebenen Verbindungen gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B) oder einer Verbindung gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B), erhalten oder erhältlich nach einer Ausführungsform eines der weiter oben beschriebenen Verfahren, zur Herstellung eines Halbleiterelements oder eines elektronischen Speichers. Die Ruthenium(0)-Komplexe der allgemeinen Formeln A und B sind aufgrund ihrer hohen Reinheit besonders gut als Ruthenium(0)-Präkursoren für die Herstellung von Halbleiterelementen oder elektronischen Speichern geeignet. Zudem sind sie besonders einfach und vergleichsweise kostengünstig darstellbar, was ihre Verwendung im großtechnischen Maßstab ermöglicht.

Mit Verbindungen gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B) nach einer der weiter oben beschriebenen Ausführungsformen oder Verbindungen gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B), erhalten oder erhältlich nach einer Ausführungsform eines der weiter oben beschriebenen Verfahren, werden definierte Ruthenium(0)-Verbindungen zur Verfügung gestellt. Diese Ruthenium(0)-Komplexe sind gemäß den beanspruchten Verfahren auf einfache, kostengünstige und reproduzierbare Art und Weise in hoher Reinheit und guten Ausbeuten darstellbar. Zudem zeichnen sich die beanspruchten Verfahren dadurch aus, dass sie - mit vergleichbarer Ausbeute und Reinheit der Zielverbindungen - auch im industriellen Maßstab durchführbar sind. Dies ist auch dadurch begründet, dass die eingesetzten Edukte einfach, kostengünstig und in guten Ausbeuten herstellbar sind. Insgesamt sind die beanspruchten Verfahren und die damit darstellbaren Ruthenium(0)-Verbindungen unter ökologischen und ökonomischen Aspekten als zufriedenstellend zu bewerten .Aufgrund ihrer hohen Reinheit sind die weiter oben genannten Ruthenium(0)-Verbindungen für den Einsatz als Ruthenium(0)-Präkursoren zur Abscheidung von elementaren Ruthenium(0)-Schichten oder Ruthenium(0) enthaltenden Schichten besonders geeignet. Dabei ist zur Herstellung qualitativ hochwertiger Substraten, welche auf einer Oberfläche eine solche Schicht aufweisen, ein vergleichsweise geringer Materialeinsatz erforderlich.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- **Fig. 1**: ein RPD des Rückstandes aus einer TGA von [Ru(anisol)(^{*i*Pr}DAD)], hergestellt gemäß Ausführungsbeispiel 2,
- **Fig. 2**: ein RPD des Rückstandes aus einer TGA von [Ru(anisol)(^{Me2N}DAD)], hergestellt gemäß Ausführungsbeispiel 3,
- **Fig. 3**: ein RPD des Rückstandes aus einer TGA von [Ru(benzol)(^{Me2N}DAD)], hergestellt gemäß Ausführungsbeispiel 5 und
- **Fig. 4**: ein RPD des Rückstandes einer der TGA von [Ru(*p*-cymol)(^{Me2N}DAD)], hergestellt gemäß Ausführungsbeispiel 9.

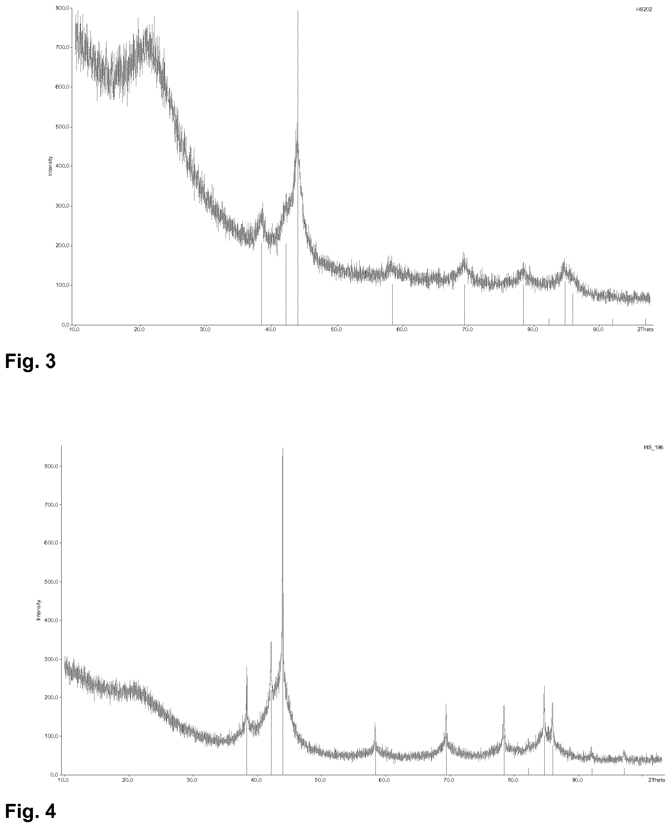

Die in **Fig. 1** bis **Fig. 4** gezeigten Röntgenpulverdiffraktogramme (RPDe, grün) wurden von Rückständen der Verbindungen [Ru(anisol)(^{*i*Pr}DAD)] (Fig. 1), [Ru(ansiol)(^{NMe2}DAD)] (Fig. 2), [Ru(benzol)(^{NMe2}DAD)] (Fig. 3) und [Ru(*p*-cymol)(^{NMe2}DAD)] (Fig. 4) aufgenommen, welche nach der jeweils zuvor durchgeführten thermogravimetrischen Analyse (TGA) vorlagen. In Rot ist jeweils die literaturbekannte Reflexlage von elementarem Ruthenium gezeigt (vgl. M. Cernohorsky, Acta Cryst. 1960, 13, 823-826). Auf der x-Achse sind jeweils die 2θ-Werte in ° aufgetragen; auf der y-Achse ist jeweils die Reflexintensität in willkürlicher Einheit aufgetragen.

Die beobachteten Reflexlagen sind sowohl für den Rückstand aus der thermischen Zersetzung der Verbindung des Typs A, nämlich [Ru(anisol)(^{*i*Pr}DAD)] (Fig. 1), als auch für den jeweiligen Rückstand aus der thermischen Zersetzung der Verbindungen des Typs B, nämlich [Ru(ansiol)(^{NMe2}DAD)] (Fig. 2), [Ru(benzol)(^{NMe2}DAD)] (Fig. 3) und [Ru(*p*-cymol)(^{NMe2}DAD)] (Fig. 4), in guter Übereinstimmung mit den literaturbekannten Reflexlagen für elementares Ruthenium. Die thermische Zersetzung der vorgenannten Verbindungen der Typen A und B zu elementarem Ruthenium ist folglich mittels TGA und anschließender Röntgenpulverdiffraktometrie (RPD) des jeweils erhaltenen Rückstandes nachgewiesen. Dies zeigt, dass die weiter oben beschriebenen Verbindungen gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B) sowie eine Verbindung gemäß der allgemeinen Formel [Ru(aren)(R^{a}-N=CR¹-CR³=N-R^{b})] (A) oder [Ru(aren)((R^{c},R^{d})N-N=CR^{H1}-CR^{H3}=N-N(R^{e},R^{f}))] (B), erhalten oder erhältlich nach einem der weiter oben beschriebenen Verfahren, als Ruthenium(0)-Präkursoren für die Abscheidung elementarer Ruthenium(0)-Schichten oder Ruthenium(0) enthaltender Schichten geeignet sind.

### Arbeitsvorschriften zur Synthese von [Ru(anisol)Cl₂]₂, [Ru(anisol)(^{iPr}DAD)], [Ru(anisol)(^{Me2N}DAD)], [Ru(benzol)(^{iPr}DAD)], [Ru(benzol)(^{Me2N}DAD)], [Ru(mesitylen)(^{iPr}DAD)], [Ru(mesitylen)(^{Me2N}DAD)], [Ru(p-cymol)(^{iPr}DAD)] und [Ru(p-cymol)(^{Me2N}DAD)]

### Materialien und Methoden:

Alle Reaktionen wurden unter Schutzgasatmosphäre mit Stickstoff oder Argon durchgeführt. Dabei wurde mit Hilfe gängiger Schlenk-Techniken gearbeitet. Die entsprechenden Vakuum-Rechen bzw. Schlenk-Linien waren mit Drehschieberpumpen der Fa. Vacuubrand verbunden. Das Abwiegen und Lagern von Edukten, Reagenzien und synthetisierten Produkten erfolgte in Handschuhkästen der Fa. MBraun (Typ *MB 150 BG-1* oder *Lab Master 130*) unter Stickstoffatmosphäre.

Die eingesetzten Lösungsmittel wurden nach Standardprozeduren getrocknet und in Edelstahlsäulen über geeigneten Trocknungsmitteln (Molsieb, Aluminiumoxid, Kupferkatalysator) gelagert. Das deuterierten Lösungsmittel C₆D₆ wurde über einer K/Na Legierung, CDCl₃, über Molsieb 3 A absolutiert, kondensiert und wiederum über Molsieb 3 A gelagert.

Alle kernresonanzspektroskopischen Messungen wurden in Automation an einem Gerät des Typs AV II 300 oder im Handbetrieb an einem Gerät des Typs AV III HD 250, AV III HD 300 oder AV III 500 durchgeführt. ¹H- und ¹³C-NMR-Spektren wurden auf das entsprechende Restprotonensignal des Lösungsmittels als interner Standard kalibriert: ¹**H:** C₆D₆: 7.16 ppm (s), CDCl₃: 7,26 ppm (s). **¹³C:** C₆D₆: 128.0 ppm (tr), CDCl₃: 77,2 ppm (s). Die chemischen Verschiebungen werden in ppm angegeben und beziehen sich auf die δ-Skala. Alle Signale werden entsprechend ihres Aufspaltungsmusters mit den folgenden Abkürzungen versehen: s (Singulett), d (Dublett), t (Triplett), hept (Heptett) oder sept (Septett). Die Kopplung zwischen zwei Kernen A und B über n Bindungen werden durch die Kopplungskonstante der Form ⁿ*J*_{AB} in Hertz (Hz) angegeben.

Die Messungen von Infrarotspektren erfolgten in Substanz in der Regel an einem Alpha ATR-IR-Spektrometer der Fa. Bruker. Die Absorptionsbanden sind angegeben in Wellenzahl (cm⁻¹) und die Intensität wird mit folgenden Abkürzungen beschrieben: w (schwach), m (mittelstark), st (stark), vst (sehr stark). Normiert wurden die Spektren stets auf die intensitätsstärkste Bande.

Die Elementaranalysen wurden an einem Vario-Micro-Cube Verbrennungsgerät der Fa. Elementar durchgeführt. Die Probenvorbereitung erfolgte in einem mit Stickstoff gefluteten Handschuhkasten durch Einwiegen der Substanz in Zinn-Tiegel, welche kalt verschweißt und bis zur Messung unter Schutzgasatmosphäre gelagert wurden. Die Elemente Wasserstoff, Kohlenstoff und Stickstoff wurden über eine Verbrennungsanalyse ermittelt, wobei die Angabe stets in Massenprozent erfolgt.

Alle EI-massenspektrometrischen Untersuchungen wurden an einem AccuTOF GCv Spektrometer der Fa. Joel durchgeführt. Luft- und feuchtigkeitsempfindliche Proben wurden in einem Handschuhkasten in Tiegeln präpariert und bis zur Messung unter Schutzgasatmosphäre gelagert. Im Falle hochaufgelöster Spektren wird jeweils das Signal mit der höchsten Intensität des Isotopenmusters angegeben.

Die thermogravimetrischen Untersuchungen wurden an einem TGA/DSC 3+ STAR System der Fa. Mettler Toledo durchgeführt. Dabei wurde bei jeder TGA- eine gekoppelte SDTA-Messung durchgeführt. Die Proben wurden je nach Methode bzw. je nach Aggregatzustand in Aluminiumoxid-, Aluminium- oder Saphirtiegeln gemessen. Die Probe wurde mit einer bestimmten Heizrate von 25 °C bis zur Endtemperatur erhitzt. Die Auswertung der erhaltenen Spektren erfolgte mit STARe Software der Fa. Mettler Toledo.

### Darstellung von Glyoxal(bis-isopropylimin) (^{iPr}DAD)

Die Synthese erfolgte gemäß E. A. Mistryukov, Mendeleev Communications 2006, 16 (5), 258 - 259.

¹H-NMR (C₆D₆, 300 MHz, 300 K): δ/ppm = 7,94 (s, 2H, CH), 3,16 (hept, 2H, *i*PrCH), 1,08 (d, 12H, CH₃); ¹H-NMR (CDCl₃, 300 MHz, 300 K): δ/ppm = 7,87 (s, 2H, CH), 3,46 (hept, 2H, *i*PrCH), 1,17 (d, 12H, CH₃); ¹³C-NMR (CDCl₃, 75 MHz, 300 K): δ/ppm = 159,8 (CH), 61,2 (*i*PrCH), 23,8 (CH₃); ¹³C-NM (C₆D₆, 75 MHz, 300 K): δ/ppm = 159,7 (CH), 61,5 (*i*PrCH), 24,0 (CH₃).

### Darstellung von Glyoxal(bis-dimethylaminoimin) (^{Me2N}DAD)

Die Synthese erfolgte gemäß T. Mino, Y. Shirae, Y. Sasai, M. Sakamoto, T. Fujita, J. Org. Chem. 2006, 71, 6834 - 6839.

**¹H-NMR** (C₆D₆, 300,2 MHz): *δ*/ppm = 7,29 (s, 2H, CHCH), 3,53 (s, 12H, NMe₂); **¹H-NMR** (CDCl₃, 300,2 MHz): *δ*/ppm = 7,09 (s, 2H, CHCH), 2,85 (s, 12H, NMe₂); **¹³C-NMR** (C₆D₆, 75.5 MHz): *δ*/ppm = 134,8 (CHCH), 42,5 (NMe₂); **HR-ESI(+)-MS:** berechnet für [M+H]⁺ = 143,1291 m/z, gefunden: 143,1295 m/z; **Elementaranalyse:** C₆H₁₄N₄ (142.21 g/mol), berechnet: C: 50,68%, H: 9,92%, N: 39,40%, gefunden: C: 49,96%, H: 9,72%, N: 39,86%; **IR** (Substanz) *ṽ*/cm⁻¹ = 2988 (w), 2952 (w), 2854 (m), 2824 (m), 2784 (m), 1668 (w), 1549 (m), 1465 (m), 1442 (m), 1420 (m), 1259 (m), 1133 (m), 1090 (w), 1009 (vs), 892 (m), 850 (w), 816 (m), 654 (w), 452 (w).

### Ausführungsbeispiel 1: Darstellung von [Ru(anisol)Cl₂]₂ via Autoklavenreaktion

Ein 250 mL Glasautoklav wurde mit RuCl₃ x H₂O (5,0 g, ca. 18,5 mmol, 1 eq), 150 mL Methanol (absolutiert) und 1-Methoxy-1,4-cyclohexadiene (10 mL, 10,64 g, 96,6 mmol, 5,23 eq) befüllt. Die Reaktionsmischung wurde bei 140 °C und 5 bar für 4 h gerührt. Nach Abkühlen der Reaktionsmischung auf Raumtemperatur wurde das ausgefallene Produkt durch Filtration abgetrennt und mit Diethylether gewaschen. Das Produkt wurde als orangefarbener kristalliner Feststoff mit einer Ausbeute von 47 % erhalten, wobei es mit 10 - 17 % des üblichen, unvermeidbaren Nebenproduktes [Ru(benzol)Cl₂]₂ verunreinigt war.

**¹H-NMR** (DMSO-*d⁶*, 300 MHz, 300 K): δ/ppm = 6,16 (t, *J* = 5,3 Hz, 2H), 5,53 (d, *J* = 5,9 Hz, 2H), 5,37 (s, 1H), 3,91 (s, 3H).

### Ausführungsbeispiel 2: Darstellung von [Ru(anisol)(^{iPr}DAD)]

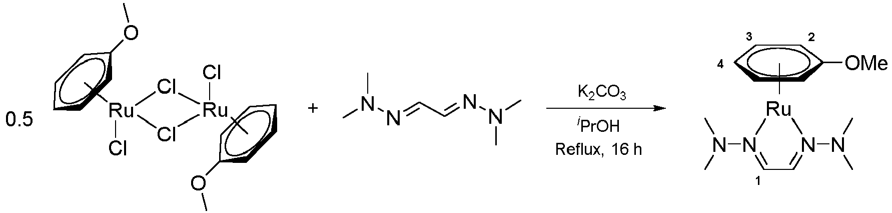

Unter Schutzgasbedingungen wurden [RuCl₂(anisol)]₂ (96,0 mg, 0,17 mmol, 1,0 eq), Bis*iso*-propyl-diazadien (48,0 mg, 0,34 mmol, 2,0 eq) und K₂CO₃ (141 mg, 1,02 mmol, 6,0 eq) in *ⁱ*PrOH (10 mL) aufgenommen und für 16 Stunden unter Rückflussbedingungen gerührt. Nach Entfernen aller flüchtigen Bestandteile im Vakuum wurde der Rückstand in nHexan (15 mL) aufgenommen und über Celite® filtriert. Der Filterkuchen wurde dabei mit zusätzlichen Mengen an *n*Hexan (20 mL) extrahiert. Das Filtrat wurde im Vakuum vom Lösungsmittel befreit und [Ru(anisol)(^{*i*Pr}DAD)] als rot-orangefarbener Feststoff (37,0 mg, 0,11 mmol, 65%) erhalten.

**¹H-NMR** (C₆D₆, 300,2 MHz): *δ*/ppm = 7,08 (s, 2H, H-1), 4,94 (d, ³*J*_{HH} = 6,1 Hz, 2H, H-2), 4,87 (t, ³*J*_{HH} = 5,1 Hz, 1H, H-4), 4,65 (t, ³*J*_{HH} = 5,7 Hz, 2H, H-3), 4,47 (sept, 2H, *ⁱ*Pr), 3,25 (s, 3H, OMe), 1,43 (d, ³*J*_{HH} = 6,7 Hz, 12H, *ⁱ*Pr); **¹³C-NMR** (C₆D₆, 75,5 MHz): *δ*/ppm = 131,1 (C-1), 100,4 (C_{q}), 74,9, 73,6, 71,9, 65,6, 62,8 (*ⁱ*Pr), 56,5 (OMe), 25,0 (*ⁱ*Pr). **HR-EI(+)-MS:** berechnet für [M]⁺ = 350,0932 m/z, gefunden: 350,1124 m/z; **Elementaranalyse:** berechnet für C₁₅H₂₄N₂ORu (349,44 g/mol): berechnet (gefunden): C: 51,56% (47,04%), H: 6,92% (H: 6,62%), N: 8,02% (8,72%); **IR** (Substanz): *ṽ*/cm⁻¹ = 3053 (w), 2965 (m), 2918 (m), 2821 (w), 1657 (w), 1559 (w), 1507 (s), 1445 (m), 1427 (m), 1249 (m), 1222 (vs), 1167 (s), 1080 (m), 1040 (m), 1013 (m), 976 (m), 926 (w), 891 (w), 811 (m), 768 (m), 613 (m), 543 (w), 513 (w); **TGA** (T_{S} = 25 °C, T_{E} = 700 °C, 10 °C/min, m = 6,70 mg) Stufen: 1, T = 154,8 °C (3 % Abbau), T_{D}(Onset) = 211,4 °C, T_{D}(max) = 252,9 °C, Abbau insgesamt: 5,75 mg (85,8%); **SDTA** (T_{S} = 25 °C, T_{E} = 700 °C, 10 °C/min, m = 6,70 mg) T_{M}(Onset) = 91,6 °C, T_{M}(max) = 95,4 °C (endotherm), T_{D}(Onset) = nicht definierbar, T_{D}(max.) = nicht definierbar; Nachweis für elementares Ruthenium (Lit*: M. Cernohorsky, Acta Cryst. 1960, 13, 823-826): **RPD** (Rückstand aus TGA-Analyse) 2θ_{Lit*}/° (2θ_{obs}/°): 38,39 (38,37), 43,72 (42,13), 44,01 (43,99), 58,33 (58,35), 69,41 (69,37), 78,30 (78,36), 82,22 (n.b.), 84,71 (84,57), 85,96 (85,77), 92,04 (n.b.), 97,09 (n.b.).

### Ausführungsbeispiel 3: Darstellung von [Ru(anisol)(^{Me2N}DAD)]

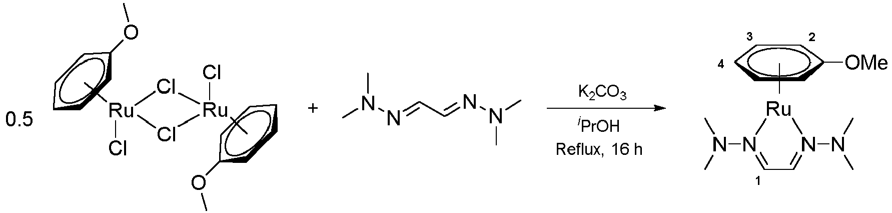

Unter Schutzgasbedingungen wurden [RuCl₂(anisol)]₂ (500 mg, 0,89 mmol, 1,0 eq), Glyoxal(*bis*-dimethylaminoimin) (254 mg, 1,79 mmol, 2,0 eq) und K₂CO₃ (1,48 g, 10,7 mmol, 6,0 eq) in *i*PrOH (10 mL) aufgenommen und für 16 Stunden unter Rückflussbedingungen gerührt. Nach Entfernen aller flüchtigen Bestandteile im Vakuum wurde der Rückstand in *n*Hexan (15 mL) aufgenommen und über Celite® filtriert. Der Filterkuchen wurde dabei mit zusätzlichen Mengen an *n*Hexan (20 mL) extrahiert. Das Filtrat wurde im Vakuum vom Lösungsmittel befreit und flüchtige Verunreinigungen mittels Sublimation (Feinvakuum, 40 °C) entfernt. Als Rückstand wurde [Ru(anisol)(^{Me2N}DAD)] in Form eines roten kristallinen Feststoffes (83,0 mg, 0,24 mmol, 27%) erhalten.

**¹H-NMR** (C₆D₆, 300,2 MHz): δ/ppm = 7,31 (s, 2H, H-1), 5,33 (d, ³J_{HH} = 5,3 Hz, 2H, H-2), 4,87 (t, ³J_{HH} = 5,1 Hz, 1H, H-4), 4,65 (t, ³J_{HH} = 5,7 Hz, 2H, H-3), 3,29 (s, 3H, OMe), 2,75 (s, 12H, N*Me*₂); **¹³C-NMR** (C₆D₆, 75,5 MHz): δ/ppm = 130,4 (C-1), 73,8 (C-4), 72,4 (C-3), 66,6 (C-2), 56,4 (OMe), 48,1 (N*Me*₂); **HR-EI(+)-MS:** berechnet für [M]⁺ = 352,0827 m/z, gefunden: 352,0845 m/z; Elementaranalyse: berechnet für C₁₃H₂₂N₄ORu (351,42 g/mol): berechnet (gefunden): C: 44,43% (45,63%), H: 6,31% (H: 6,28%), N: 15,94% (15,39%); **IR** (Substanz): *ṽ*/cm⁻¹ = 3046 (w), 2973 (w), 2933 (m), 2853 (m), 2812 (m), 2771 (m), 1508 (m), 1435 (s), 1267 (m), 1227 (vs), 1169 (m), 1130 (m), 1009 (s), 919 (m), 886 (m), 858 (m), 814 (m), 769 (m), 738 (m), 637 (w), 614 (w), 553 (w) 473 (w), 447 (w) 417 (w); TGA (T_{S} = 25 °C, T_{E} = 700 °C, 10 °C/min, m = 11,5 mg) Stufen: 2, T = 177,1 °C (3% Abbau), Stufe 1: T(Onset) = 182,2 °C, T(max) = 239,9 °C, Stufe 2: T(Onset) = 460,8 °C, T(max) = 508,3 °C, Abbau insgesamt: 8,26 mg (71,8%); SDTA (T_{S} = 25 °C, T_{E} = 700 °C, 10 °C/min, m = 11,5 mg) T_{M}(Onset) = 60,1 °C, T_{M}(max) = 70,2 °C (endotherm), T_{D1}(Onset) = 217,2 °C, T_{D1}(max) = 239,6 °C (exotherm), T_{D2}(Onset) = 483,5 °C, T_{D2}(max) = 516,2 °C (exotherm); Nachweis für elementares Ruthenium (Lit*: M. Cernohorsky, Acta Cryst. 1960, 13, 823-826): **RPD** (Rückstand aus TGA-Analyse) 2θ_{Lit*}/° (2θ_{obs}/°): 38,39 (38,34), 43,72 (42,09), 44,01 (43,99), 58,33 (58,26), 69,41 (69,37), 78,30 (78,28), 82,22 (n.b.), 84,71 (84,68), 85,96 (85,87), 92,04 (n.b.), 97,09 (n.b.).

### Ausführungsbeispiel 4: Darstellung von [Ru(benzol)(^{iPr}DAD)]

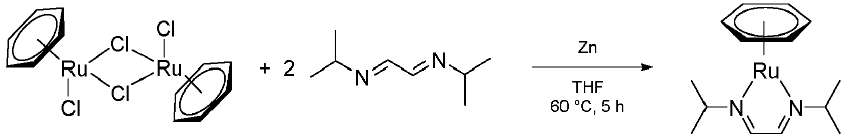

[RuCl₂(benzol)]₂ (800 mg, 1,60 mmol, 1,0 eq) und Zink-Pulver (418 mg, 6,40 mmol, 4,0 eq) wurden in THF (30 mL) vorgelegt und unter Rühren mit ^{*i*Pr}DAD (673 mg, 4,80 mmol, 3,0 eq) versetzt. Das Gemisch wurde für 5 Stunden bei 60 °C gerührt, wobei eine Färbung ins Dunkelrote beobachtet wurde. Nach Entfernen aller flüchtigen Bestandteile im Vakuum wurde der Rückstand in Toluol (15 mL) aufgenommen, für eine Stunde bei Raumtemperatur gerührt und dann über Celite® filtriert. Der Feststoff wurde dabei mehrmals mit Toluol extrahiert (40 mL), bis kein rötliches Filtrat mehr erhalten wurde. Nach Eintrocknen des Filtrats im Vakuum wurde die Zielverbindung im dynamischen Feinvakuum bei einer Ölbadtemperatur von 120 °C aus dem erhaltenen Rückstand herauskondensiert. [Ru(benzol)(*^{iPr}*DAD)] wurde als dunkelrote Flüssigkeit (466 mg, 1,46 mmol, 46%) erhalten, welche letztlich vollständig auskristallisierte und bei Raumtemperatur als Feststoff vorlag.

**¹H-NMR** (C₆D₆, 300,2 MHz): δ/ppm = 7,05 (s, 2 H, H-1), 4,83 (s, 6 H, Benzol), 4,39 (sept, 2 H, *ⁱ*Pr), 1,41 (d, ³J_{HH} = 6,8 Hz, 12H, *ⁱ*Pr); **¹³C-NMR** (C₆D₆, 75,5 MHz): δ/ppm = 131,5 (C-1), 74,9 (Benzol), 63,4 (iPr), 24,9 (iPr); **HR-EI-MS:** berechnet für [M]⁺ = 320,0827 m/z, gefunden: 320,0805 m/z; **Elementaranalyse:** C₁₄H₂₂N₂Ru (319,41 g/mol), berechnet: C: 52,64%, H: 6,94%, N: 8,77%, gefunden: C: 52,65%, H: 6,89%, N: 8,98%; **IR** (Substanz): *ṽ*/cm⁻¹ = 3047 (w), 2959 (m), 2922 (m), 2859 (m), 1838 (w), 1726 (m),1641 (w), 1510 (m), 1433 (m), 1353 (m), 1276 (m), 1247 (s), 1216 (vs), 1168 (s), 1118 (s), 1072 (m), 996 (m), 904 (m), 793 (m), 718 (s), 614 (m), 546 (m); **TGA** (T_{S} = 25 °C, T_{E} = 700 °C, 10 °C/min, m = 12,0 mg) Stufen: 1, T = 185,8 °C (3% Abbau), T_{D}(Onset) = 222,8 °C, T_{D}(max) = 268,4 °C, Abbau insgesamt: 11,8 mg (98,0%); **SDTA** (T_{S} = 25 °C, T_{E} = 900 °C, 10 °C/min, m = 12,0 mg): T_{M}(Onset) = 101,6 °C , T_{M}(max.) = 106,7 °C (endotherm), T_{D}(Onset) = 250 °C, T_{D}(max) = 271,1 °C (exotherm).

### Ausführungsbeispiel 5: Darstellung von [Ru(benzol)(^{Me2N}DAD)]

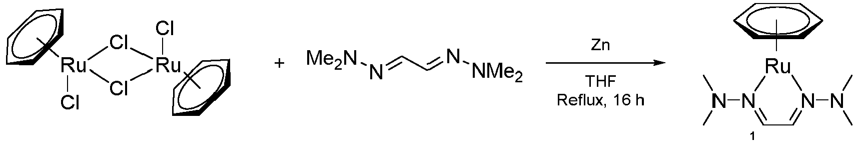

[RuCl₂(benzol)]₂ (400 mg, 0,80 mmol, 1,0 eq) und Zink-Pulver (209 mg, 3,20 mmol, 4,0 eq) wurden in THF (15 mL) vorgelegt und unter Rühren mit ^{Me2N}DAD (227 mg, 1,60 mmol, 2,0 eq) in THF (5 mL) versetzt. Das Gemisch wurde für 5 Stunden bei 60 °C gerührt, wobei eine Farbänderung ins Dunkelrote beobachtet wurde. Nach Entfernen aller flüchtigen Bestandteile im Vakuum wurde der Rückstand in Toluol (15 mL) aufgenommen, für eine Stunde bei Raumtemperatur gerührt und dann über Celite® filtriert. Der Feststoff wurde dabei mehrmals mit Toluol extrahiert (40 mL), bis kein rötliches Filtrat mehr erhalten wurde. Nach Eintrocknen des Filtrats im Vakuum wurde die Zielverbindung im dynamischen Feinvakuum bei einer Ölbadtemperatur von 120 °C aus dem erhaltenen Rückstand herauskondensiert. [Ru(benzol)(^{Me2N}DAD)] wurde als dunkelrote Flüssigkeit (153 mg, 0,48 mmol, 60%) erhalten, welche letztlich vollständig auskristallisierte und bei Raumtemperatur als Feststoff vorlag.

Im erhaltenen SDTA-Experiment wurden zwei endotherme Peaks gefunden, welche beide einen Schmelzpunkt anzeigen könnten. Mittels optischer Schmelzpunktbestimmung konnte der zweite Peak eindeutig einem solchen Prozess zugeordnet werden, wohingegen im Temperaturbereich des ersten Peaks keine Veränderung der Probe erkennbar war.

**¹H-NMR** (C₆D₆, 300,2 MHz): δ/ppm = 7,31 (s, 2H, H-1), 5,19 (s, 6H, H-arom.), 2,71 (s, 12H, N*Me*₂); **¹³C-NMR** (C₆D₆, 75,5 MHz): δ/ppm = 131,2 (C-1), 75,7 (C-arom.), 48,1 (N*Me*₂); **HR-EI-MS:** berechnet für [M]⁺ = 322,0731 m/z, gefunden: 322,0733m/z; **Elementaranalyse:** C₁₂H₂₀N₄Ru (321,39 g/mol), berechnet: C: 44,85%, H: 6,27%, N: 17,43%, gefunden: C: 44,84%, H: 6,26%, N: 17,85%; **IR** (Substanz): *ṽ*/cm⁻¹ = 2936 (m), 2829 (m), 2798 (m), 2756 (m), 1648 (w), 1501 (m), 1448 (m), 1429 (s), 1256 (s), 1227 (m), 1205 (m), 1139 (m), 966 (s), 909 (m), 865 (m), 797 (vs), 712 (s), 684 (m), 599 (m), 541 (w), 457 (w), 413 (m); **TGA** (T_{S} = 25 °C, T_{E} = 700 °C, 10 °C/min, m = 12,3 mg) Stufen: 2, T = 192,2 °C (3% Abbau), Stufe 1: T_{D1}(Onset) = 221,2 °C, T_{D1}(max.) = 258,5 °C, Stufe 2: T_{D2}(Onset) = 465,4 °C, T_{D2}(max.) = 507,4 °C, Abbau insgesamt: 9,01 mg (81,2%); **SDTA** (T_{S} = 25 °C, T_{E} = 700 °C, 10 °C/min, m = 12,3 mg): T(Onset) = 56,8 °C , T(max.) = 60,0 °C (endotherm), T_{M}(Onset) = 84,2 °C , T_{M}(max.) = 86,5 °C (endotherm), T_{D1}(Onset) = 224,7 °C , T_{D1}(max) = 246,1 °C (exotherm); Schmelzpunktbestimmung: (N₂, T_{S} = 50 °C, T_{E} = 100 °C, 2 °C/min): T_{M} = 85,3 °C;
Nachweis für elementares Ruthenium (Lit*: M. Cernohorsky, Acta Cryst. 1960, 13, 823-826): **RPD** (Rückstand aus TGA-Analyse) 2θ_{Lit*}/° (2θobs/°): 38,39 (38,61), 43,72 (42,27), 44,01 (43,89), 58,33 (58,27), 69,41 (69,22), 78,30 (78,36), 82,22 (n.b.), 84,71 (84,66), 85,96 (85,41), 92,04 (n.b.), 97,09 (n.b.).

### Ausführungsbeispiel 6: Darstellung von [Ru(mesitylen)(^{iPr}DAD)]

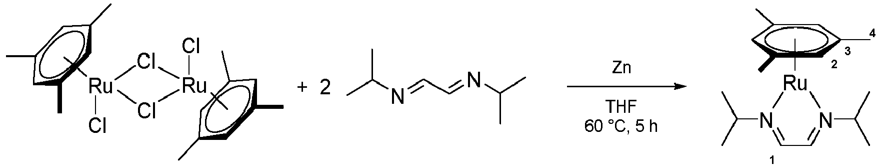

[RuCl₂(mesitylen)]₂ (800 mg, 1,37 mmol, 1,0 eq) und Zink-Pulver (358 mg, 5,48 mmol, 4,0 eq) wurden in THF (15 mL) vorgelegt und unter Rühren mit *i*PrDAD (576 mg, 4,11 mmol, 3,0 eq) versetzt. Das Gemisch wurde für 5 Stunden bei 60 °C gerührt, wobei eine Färbung ins Dunkelrote beobachtet wurde. Nach Entfernen aller flüchtigen Bestandteile im Vakuum wurde der Rückstand in Toluol (20 mL) aufgenommen und über Celite® filtriert. Der Feststoff wurde dabei mehrmals mit Toluol extrahiert (40 mL), bis kein rötliches Filtrat mehr erhalten wurde. Nach Eintrocknen des Filtrats im Vakuum wurde die Zielverbindung im dynamischen Feinvakuum bei einer Ölbadtemperatur von 120 °C aus dem erhaltenen Rückstand herauskondensiert. [Ru(mesitylen)(^{*i*Pr}DAD)] wurde als orange-rote Flüssigkeit (305 mg, 0,84 mmol, 31%) erhalten, welche letztlich vollständig auskristallisierte und bei Raumtemperatur als orangefarbener Feststoff vorlag.
**¹H-NMR** (C₆D₆, 300,2 MHz: δ/ppm = 7,06 (s, 2 H, CHCH), 4,76 (s, 3 H, H-2), 4,53 (sept, 2 H, iPr), 2,04 (s, 9 H, H-3), 1,44 (d, ³J_{HH} = 6,8 Hz, 12 H, *i*Pr); **¹³C-NMR** (C₆D₆, 75,5 MHz): δ/ppm = 129,4 (C-1), 85,8 (C-3), 78,1 (C-2), 61,4 (*i*Pr), 24,7 (iPr), 20,3 (C-4); **HR-EI-MS:** berechnet für [M]⁺ = 362,1296 m/z, gefunden: 362,1313 m/z; **Elementaranalyse:** C₁₇H₂₈N₂Ru (361,50 g/mol), berechnet: C: 56,48%, H: 7,81%, N: 7,75%, gefunden: C: 56,04%, H: 7,61%, N: 8,23%; **IR** (Substanz): *ṽ*/cm⁻¹ = 2963 (m), 2917 (w), 2859 (w), 1635 (w), 1516 (m), 1441 (m), 1371 (w), 1244 (s), 1217 (vs), 1166 (m), 1028 (m), 984 (m), 874 (m), 712 (vs), 615 (w), 564 (w), 509 (w), 475 (w).

### Ausführungsbeispiel 7: Darstellung von [Ru(mesitylen)(^{Me2N}DAD)]

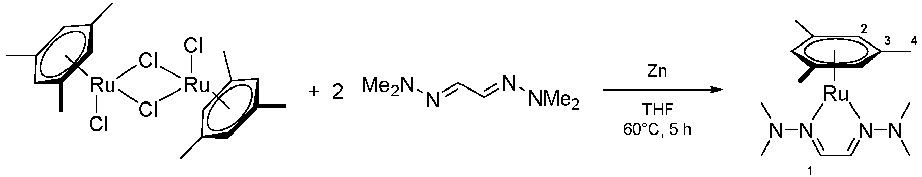

[RuCl₂(mesitylen)]₂ (800 mg, 1,37 mmol, 1,0 eq) und Zink-Pulver (358 mg, 5,48 mmol, 4,0 eq) wurden in THF (15 mL) vorgelegt und unter Rühren mit ^{Me2N}DAD (576 mg, 4,11 mmol, 3,0 eq) in THF (5 mL) versetzt. Das Gemisch wurde für 5 Stunden bei 60 °C gerührt, wobei eine Färbung ins Dunkelrote beobachtet wurde. Nach Entfernen aller flüchtigen Bestandteile im Vakuum wurde der Rückstand in Toluol (20 mL) aufgenommen und über Celite® filtriert. Der Feststoff wurde dabei mehrmals mit Toluol extrahiert (30 mL), bis kein rötliches Filtrat mehr erhalten wurde. Nach Eintrocknen des Filtrats im Vakuum wurde die Zielverbindung im dynamischen Feinvakuum bei einer Ölbadtemperatur von 120 °C aus dem Rückstand herauskondensiert. [Ru(mesitylen)(^{Me2N}DAD)] wurde als orange-rote Flüssigkeit (332 mg, 0,92 mmol, 34%) erhalten, welche letztlich vollständig auskristallisierte und bei Raumtemperatur als orangenfarbener Feststoff vorlag.

**¹H-NMR** (C₆D₆, 300,2 MHz): δ/ppm = 7,13 (s, 2 H, H-1), 4,95 (s, 3 H, H-2), 2,75 (s, 12 H, N*Me*₂), 2,17 (s, 9 H, H-4); **¹³C-NMR** (C₆D₆, 75,5 MHz9: δ/ppm = 125,7 (C-1), 87,9 (C-3), 79,1 (C-2), 47,2 (N*Me*₂), 20,5 (C-4); **HR-EI-MS:** berechnet für [M]⁺ = 364,1201 m/z, gefunden: 364,1204 m/z; **Elementaranalyse:** C₁₅H₂₆N₄Ru (363,47 g/mol), berechnet: C: 49,57%, H: 7,21%, N: 15,41 %; gefunden: C: 48,51 %, H: 7,13%, N: 16,10%; **IR** (Substanz): *ṽ*/cm⁻¹ = 2972 (m), 2934 (m), 2862 (m), 2832 (m), 2799 (m), 2761 (m), 1504 (m), 1445 (s), 1371 (m), 1235 (m), 1199 (m), 1150 (m), 1031 (m), 995 (m), 853 (s), 678 (vs), 567 (w), 567 (m), 510 (m).

### Ausführungsbeispiel 8: Darstellung von [Ru(p-cymol)(^{iPr}DAD)]

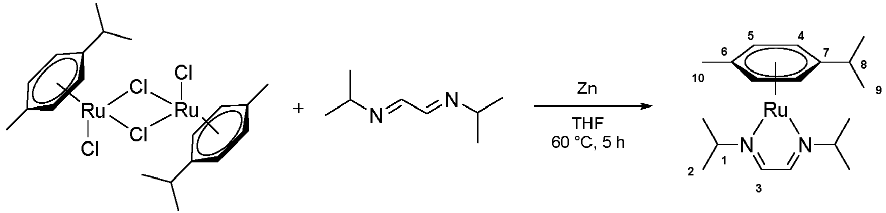

[RuCl₂(*p*-cymol)]₂ (1,00 g, 1,63 mmol, 1,0 eq) und Zink-Pulver (426 mg, 6,53 mmol, 4,0 eq) wurden in einem Schutzgaskolben vorgelegt und mit THF (30 mL) versetzt. Unter Rühren wurde *i*PrDAD (916 mg, 6,53 mmol, 4,0 eq) zugegeben und das Gemisch für fünf Stunden bei 60 °C gerührt, wobei eine Färbung ins Dunkelrote beobachtet wurde. Nach Entfernen aller flüchtigen Bestandteile im Vakuum wurde der Rückstand in Toluol (20 mL) aufgenommen, für eine Stunde bei Raumtemperatur gerührt und dann über Celite® filtriert. Der Feststoff wurde dabei mehrmals mit Toluol extrahiert (50 mL), bis kein rötliches Filtrat mehr erhalten wurde. Nach Eintrocknen des Filtrats im Vakuum wurde die Zielverbindung aus dem Rückstand mittels Umkondensation im Feinvakuum bei einer Ölbadtemperatur von 120 °C isoliert werden. [Ru(*p*-cymol)(^{*i*Pr}DAD)] wurde als dunkelrote Flüssigkeit (413 mg, 1,13 mmol, 35%) erhalten, welche letztlich vollständig auskristallisierte und bei Raumtemperatur als Feststoff vorlag.

**¹H-NMR** (C₆D₆, 300,2 MHz): δ/ppm = 7,03 (s, 2H, H-3), 4,62 (s, 4H, H-4, H-5), 4,49 (sept, 2H, H-1), 2,43 (sept, 1H, H-8), 2,10 (s, 3H, H-10), 1,45 (d, ³J_{HH} = 6,7 Hz, 12H, H-2), 1,15 (d, ³J_{HH} = 6,7 Hz, 6H, H-9); **¹³C-NMR** (C₆D₆, 75,5 MHz): δ/ppm = 130,5 (C-3), 100,5 (C-7), 88,6 (C-6), 75,4 (C-5), 73,4 (C-4), 62,9 (C-1), 32,6 (C-8), 24,8 (C-2), 21,1 (C-10); **HR-EI(+)-MS:** berechnet für [M]⁺ = 376,1453 m/z, gefunden: 376,1443 m/z; **Elementaranalyse:** C₁₆H₂₈N₄Ru (377,50 g/mol), berechnet: C: 57,57%, H: 8,05%, N: 7,46%, gefunden: C: 57,48%, H: 7,87%, N: 7,99%; **IR** (Substanz): *ṽ*/cm⁻¹ = 3077 (w), 3049 (w), 2959 (s), 2921 (m), 2860 (m), 1815 (w), 1632 (w), 1517 (m), 1439 (m), 1372 (m), 1354 (m), 1319 (m), 1243 (s), 1216 (vs), 1164 (s), 1140 (m), 1114 (m), 1081 (m), 1044 (m), 905 (m), 859 (m), 834 (m), 795 (m), 717b (vs), 636 (m), 613 (m), 544 (m), 420 (w); **TGA** (T_{S} = 25 °C, T_{E} = 700 °C, 10 °C/min, m = 11,8 mg) Stufen: 1, T = 185,6 °C (3% Abbau), T_{D}(Onset) = 229,4 °C, T_{D}(max.) = 266,9 °C, Abbau insgesamt: 11,5 mg (97,1%); **SDTA** (T_{S} = 25 °C, T_{E} = 700 °C, 10 °C/min, m = 11,8 mg): T_{M}(Onset) = 38,0 °C , T_{M}(max.) = 42,3 °C (endotherm), T_{D}(Onset) = n.b , T_{D}(max) = 168,3 °C (exotherm).

### Ausführungsbeispiel 9: Darstellung von [Ru(p-cymol)(^{Me2N}DAD)]

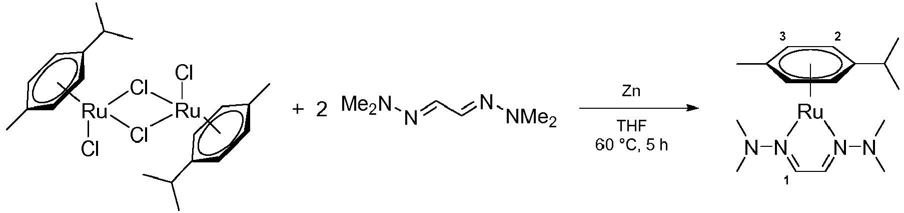

[RuCl₂(*p*-cymol)]₂ (40,0 g, 65,3 mmol, 1,0 eq) und Zink (20,0 g, 306 mmol, 4,7 eq) wurden in einem Schutzgaskolben vorgelegt und mit THF (200 mL) versetzt. Unter Rühren wurde ^{Me2N}DAD (37,15 g, 261 mmol, 4,0 eq) zugegeben und das Gemisch für fünf Stunden bei 60 °C gerührt, wobei eine Färbung ins Dunkelrote beobachtet wurde. Nach Entfernen aller flüchtigen Bestandteile im Vakuum wurde der Rückstand in Toluol (100 mL) aufgenommen, für eine Stunde bei Raumtemperatur gerührt und dann über Celite® filtriert. Der Feststoff wurde dabei mehrmals mit Toluol extrahiert (600 mL), bis kein rötliches Filtrat mehr erhalten wurde. Nach Eintrocknen des Filtrats im Vakuum wurde die Zielverbindung über eine Etherbrücke im Feinvakuum bei einer Ölbadtemperatur von 120 °C isoliert. **[Ru(*p*-cymol)(^{Me2N}DAD)]** wurde als dunkelrote Flüssigkeit (30,8 g, 81,6 mmol, 62%) erhalten, welche letztlich vollständig auskristallisierte und bei Raumtemperatur als Feststoff vorlag.

**¹H-NMR** (C₆D₆, 300,2 MHz): δ/ppm = 7,22 (s, 2H, H-1), 5,08 (s, 4H, H-2, H-3), 2,78 (s, 12H, N*Me*₂), 2,52 (sept, 1H, *i*Pr), 2,13 (s, 3H, Me), 1,15 (d, ³J_{HH} = 7,1 Hz, 6H, *i*Pr); **¹³C-NMR** (C₆D₆, 75,5 MHz: δ/ppm = 129,5 (C-1), 101,9 (Cq), 90,2 (Cq), 76,5 (C-3), 74,5 (C-2), 48,0 (NMe2), 32,8 (iPr), 24,8 (*i*Pr), 21,2 (Me); **HR-EI(+)-MS:** berechnet für [M]⁺ = 378,1357 m/z, gefunden: 378,1352 m/z; **Elementaranalyse:** C₁₆H₂₈N₄Ru (377,50 g/mol), berechnet: C: 50,91%, H: 7,48%, N: 14,84%, gefunden: C: 50,94%, H: 7,27%, N: 15,05%; **IR** (Substanz) *ṽ*/cm⁻¹ = 2959 (m), 2926 (m), 2840 (m), 2804 (m), 2759 (m), 1727 (w), 1648 (w), 1507 (m), 1435 (s), 1379 (m), 1355 (m), 1355 (m), 1316 (m), 1269 (vs), 1192 (m), 1141 (m), 1081 (m), 1026 (m), 924 (m), 865 (m), 840 (s), 796 (m), 720 (vs), 689 (m), 655 (w), 639 (w), 470 (w); **TGA** (T_{S} = 25 °C, T_{E} = 600 °C, 10 °C/min, m = 12,3 mg) Stufen: 2, T = 186,8 °C (3% Abbau), T_{D1}(Onset) = 217,0 °C, T_{D1}(max.) = 245,0 °C (71,0%), T_{D2}(Onset) = 456,0 °C, T_{D2}(max.) = 502,5 °C (5,89%), Abbau insgesamt: 9,45 mg (76,9%), **SDTA** (T_{S} = 25 °C, T_{E} = 600 °C, 10 °C/min, m = 12,3 mg): T_{M}(Onset) = 54,7 °C , T_{M}(max.) = 59,1 °C (endotherm), T_{D1}(Onset) = 214,2 °C , T_{D1}(max) = 237,2 °C (exotherm); Nachweis für elementares Ruthenium (Lit*: M. Cernohorsky, Acta Cryst. 1960, 13, 823-826): **RPD** (Rückstand aus TGA-Analyse) 2θ_{Lit*}/° (2θobs/°): 38,39 (38,38), 43,72 (42,15), 44,01 (43,99), 58,33 (58,30), 69,41 (69,37), 78,30 (78,34), 82,22 (n.b.), 84,71 (84,65), 85,96 (85,92), 92,04 (n.b.), 97,09 (n.b.).

Die Erfindung ist nicht auf eine der vorbeschriebenen Ausführungsformen beschränkt, sondern in vielfältiger Weise abwandelbar.

Man erkennt, dass die Erfindung Verbindungen gemäß der allgemeinen Formel [Ru(aren)(R^{a}-N=CR¹-CR³=N-R^{b})] oder [Ru(aren)((R^{c},R^{d})N-N=CR^{H1}-CR^{H3}=N-N(R^{e},R^{f}))] betrifft. Dabei ist aren ausgewählt aus der Gruppe bestehend aus einkernigen und mehrkernigen Arenen und einkernigen und mehrkernigen Heteroarenen. R¹, R³, R^{H1}, R^{H3} und R^{a} - R^{f} sind unabhängig voneinander ausgewählt aus der Gruppe bestehend aus H, einem Alkylrest (C1 - C10) und einem Arylrest. Sie betrifft weiterhin Verfahren zur Herstellung dieser Verbindungen, Verbindungen, erhältlich nach diesen Verfahren, deren Verwendung sowie ein Substrat, welches auf einer Oberfläche eine Ruthenium-Schicht oder eine Ruthenium enthaltende Schicht aufweist. Zudem betrifft die Erfindung ein Verfahren zur Herstellung von Verbindungen [Ru(aren)X₂]₂, wobei aren ausgewählt ist aus der Gruppe bestehend aus einkernigen und mehrkernigen Arenen und X = Halogen, Verbindungen dieses Typs, erhältlich nach diesem Verfahren, und deren Verwendung.

Die vorgenannten Ruthenium(0)-Verbindungen sind mit dem weiter oben beschriebenen Verfahren auf einfache, kostengünstige und reproduzierbare Art und Weise in hoher Reinheit und guter Ausbeute darstellbar. Die Verfahren zur Herstellung können auch im industriellen Maßstab durchgeführt werden. Aufgrund ihrer hohen Reinheit sind die weiter oben genannten Ausführungsformen der beanspruchten Ruthenium(0)-Komplexe für den Einsatz als Ruthenium(0)-Präkursoren geeignet. Vorteilhafterweise ist zur Abscheidung einer Ruthenium(0)-Schicht oder einer Ruthenium(0) enthaltenden Schicht lediglich ein geringer Materialeinsatz erforderlich.

Sämtliche aus den Ansprüchen, der Beschreibung und den Figuren hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Verbindungen
▪ gemäß der allgemeinen Formel
[Ru(aren)(R^{a}-N=CR¹-CR³=N-R^{b})] (A)
wobei
i) aren ausgewählt ist aus der Gruppe bestehend aus einkernigen und mehrkernigen Arenen und einkernigen und mehrkernigen Heteroarenen
und
ii) R¹, R³, R^{a} und R^{b} unabhängig voneinander ausgewählt sind aus der Gruppe bestehend aus H, einem Alkylrest (C1 - C10) und einem Arylrest
oder
▪ gemäß der allgemeinen Formel
[Ru(aren)((R^{c},R^{d})N-N=CR^{H1}-CR^{H3}=N-N(R^{e},R^{f}))] (B)
wobei
i) aren ausgewählt ist aus der Gruppe bestehend aus einkernigen und mehrkernigen Arenen und einkernigen und mehrkernigen Heteroarenen
und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest.

2. Verbindungen gemäß der allgemeinen Formel A nach Anspruch 1,
wobei aren ≠ Benzol und aren ≠ Benzolhomologes,
wobei die ausgenommenen Benzolhomologen ein bis sechs Substituenten aufweisen,
wobei die Substituenten unabhängig voneinander ausgewählt sind aus der Gruppe bestehend aus
einem Alkylrest, einem Alkylsilylrest, einem Alkylaminrest und einem Fluoralkylrest, wobei Alkyl = C1 - C4.

3. Verbindungen gemäß der allgemeinen Formel A nach Anspruch 1,
wobei aren ausgewählt ist aus der Gruppe bestehend aus
- einkernigen und mehrkernigen Benzolderivaten, welche wenigstens einen Substituenten aufweisen,
wobei die Substituenten unabhängig voneinander ausgewählt sind aus der Gruppe bestehend aus einem Halogenatom, einem Alkoxyrest, einem Alkylrest (C5 - C10) und einem Arylrest,
und
- einkernigen und mehrkernigen Heteroarenen.

4. Verbindungen gemäß der allgemeinen Formel A nach einem der Ansprüche 1 bis 3,
wobei
R¹ und R³ unabhängig voneinander ausgewählt sind aus der Gruppe bestehend aus H, einem Alkylrest (C1 - C10) und einem Arylrest
und
R^{a} = R^{b} = H, Alkylrest (C1 - C10) oder Arylrest ist.

5. Verbindungen gemäß der allgemeinen Formel A nach einem der Ansprüche 1 bis 3,
wobei
R¹ = R³ = H, Alkylrest (C1 - C10) oder Arylrest
und
R^{a} = R^{b} = H, Alkylrest (C1 - C10) oder Arylrest ist.

6. Verbindungen gemäß der allgemeinen Formel B nach Anspruch 1,
wobei
R^{H1}, R^{H3} unabhängig voneinander ausgewählt sind aus der Gruppe bestehend aus H, einem Alkylrest (C1 - C10) und einem Arylrest
und
R^{c} = R^{e} = H, Alkylrest (C1 - C10) oder Arylrest
und
R^{d} = R^{f} = H, Alkylrest (C1 - C10) oder Arylrest ist.

7. Verbindungen gemäß der allgemeinen Formel B nach Anspruch 1,
wobei
R^{H1}, R^{H3} unabhängig voneinander ausgewählt sind aus der Gruppe bestehend aus H, einem Alkylrest (C1 - C10) und einem Arylrest
und
R^{c} = R^{d} = R^{e} = R^{f} = H, Alkylrest (C1 - C10) oder Arylrest ist.

8. Verbindungen gemäß der allgemeinen Formel B nach Anspruch 1,
wobei
R^{H1} = R^{H3} = H, Alkylrest (C1 - C10) oder Arylrest
und
R^{c} = R^{e} = H, Alkylrest (C1 - C10) oder Arylrest
und
R^{d} = R^{f} = H, Alkylrest (C1 - C10) oder Arylrest ist.

9. Verbindungen gemäß der allgemeinen Formel B nach Anspruch 1,
wobei
R^{H1} = R^{H3} = H, Alkylrest (C1 - C10) oder Arylrest
und
R^{c} = R^{d} = R^{e} = R^{f} = H, Alkylrest (C1 - C10) oder Arylrest ist.

10. Verbindungen gemäß
- der allgemeinen Formel A
oder
- der allgemeinen Formel B
nach einem der Ansprüche 1 bis 9,
wobei einkernige oder mehrkernige Heteroarene ausgewählt sind aus der Gruppe bestehend aus
Pyridin, Pyridinderivaten, Diazinen, Diazinderivaten, Triazinen und Triazinderivaten.

11. Verfahren zur Herstellung einer Verbindung gemäß der allgemeinen Formel
[Ru(aren)X₂]₂ (C),
wobei
- aren ausgewählt ist aus der Gruppe bestehend aus einkernigen und mehrkernigen Arenen und einkernigen und mehrkernigen Heteroarenen
und
- X = Halogen,
umfassend die Schritte:
a) Befüllen eines Autoklaven mit einer Mischung enthaltend
- ein Cyclohexadien,
- ein Ruthenium(III)-halogenid und
- ein Lösungsmittel,
b) Erwärmen des Autoklaven auf eine Temperatur T.

12. Verfahren nach Anspruch 11,
wobei das Cyclohexadien 1,3-Cyclohexadien, 1,4-Cyclohexadien, 1-Ethyl-1,4-cyclohexadien, 2-Methyl-5-(1-methylethyl)-1,3-cyclohexadien, 1,3,5-Trimethylcyclohexa-1,4-dien oder 1-Methoxycyclohexa- 1,4-dien ist.

13. Verfahren nach Anspruch 11 oder 12, wobei das Ruthenium(III)-halogenid ein Ruthenium(III)-chlorid, ein Ruthenium(III)-bromid oder ein Ruthenium(III)-iodid ist.

14. Verfahren nach einem der Ansprüche 11 bis 13, wobei das Lösungsmittel ein polares Lösungsmittel ist.

15. Verfahren nach einem der Ansprüche 11 bis 14, wobei das Lösungsmittel ein Alkohol, Acetonitril, Aceton oder ein Ether ist.

16. Verfahren nach einem der Ansprüche 11 bis 15, wobei die Temperatur T des Autoklaven zwischen 50 °C und 250 °C beträgt.

17. Verbindungen gemäß der allgemeinen Formel [Ru(aren)X₂]₂ (C),
erhältlich nach einem Verfahren gemäß einem der Ansprüche 11 bis 16,
wobei
- aren ausgewählt ist aus der Gruppe bestehend aus einkernigen und mehrkernigen Arenen und einkernigen und mehrkernigen Heteroarenen
und
- X = Halogen.

18. Verwendung einer
Verbindung gemäß der allgemeinen Formel [Ru(aren)X₂]₂ (C),
erhalten nach einem Verfahren gemäß einem der Ansprüche 11 bis 16,
oder
gemäß Anspruch 17,
als Präkursor zur Herstellung einer Ruthenium(0)-Verbindung.

19. Verfahren zur Herstellung einer Verbindung
▪ gemäß der allgemeinen Formel
[Ru(aren)((R^{c},R^{d})N-N=CR^{H1}-CR^{H3}=N-N(R^{e},R^{f}))] (B)
wobei
i) aren ausgewählt ist aus der Gruppe bestehend aus einkernigen und mehrkernigen Arenen und einkernigen und mehrkernigen Heteroarenen
und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
umfassend die Schritte:
a) Zurverfügungstellung einer Verbindung
gemäß der allgemeinen Formel [Ru(aren)X₂]₂ (C),
wobei
- X = Halogen und
- aren ausgewählt ist aus der Gruppe bestehend aus einkernigen und mehrkernigen Arenen und einkernigen und mehrkernigen Heteroarenen,
b) Umsetzung von [Ru(aren)X₂]₂ mit M^{A}₂CO₃ oder M^{E}CO₃,
wobei M^{A} = Alkalimetall und M^{B} = Erdalkalimetall, und
einem Liganden gemäß der allgemeinen Formel
(R^{c},R^{d})N-N=CR^{H1}-CR^{H3}=N-N(R^{e},R^{f})
in einem polaren Lösungsmittel.

20. Verfahren nach Anspruch 19, wobei
- M^{A}₂CO₃ eingesetzt wird, wobei M^{A} = Li, Na oder K, oder
- M^{E}CO₃ eingesetzt wird, wobei M^{E} = Mg, Ca, Sr oder Ba.

21. Verfahren nach Anspruch 19 oder 20, wobei
das molare Verhältnis
[Ru(aren)X₂]₂: M^{A}₂CO₃
oder
[Ru(aren)X₂]₂: M^{E}CO₃
zwischen 1 : 2 und 1 : 10 beträgt.

22. Verfahren nach einem der Ansprüche 19 bis 21, wobei
das molare Verhältnis
[Ru(aren)X₂]₂: (R^{c},R^{d})N-N=CR^{H1}-CR^{H3}=N-N(R^{e},R^{f})
zwischen 1 : 2 und 1 : 10 beträgt.

23. Verfahren nach einem der Ansprüche 19 bis 22, wobei das Lösungsmittel ein Alkohol, ein Ether, Acetonitril oder Aceton ist.

24. Verfahren nach einem der Ansprüche 19 bis 23,
wobei das Reaktionsgemisch aus Schritt b) erwärmt wird,
wobei eine Temperatur T₁ des Reaktionsgemisches zwischen 20 °C und 160 °C beträgt.

25. Verfahren nach einem der Ansprüche 19 bis 24, wobei nach Schritt b) ein Schritt c) durchgeführt wird, welcher eine Isolierung von
[Ru(aren)((R^{c},R^{d})N-N=CR^{H1}-CR^{H3}=N-N(R^{e},R^{f}))] (B)
umfasst.

26. Verbindungen gemäß der allgemeinen Formel
[Ru(aren)((R^{c},R^{d})N-N=CR^{H1}-CR^{H3}=N-N(R^{e},R^{f}))] (B),
wobei
ii) aren ausgewählt ist aus der Gruppe bestehend aus einkernigen und mehrkernigen Arenen und einkernigen und mehrkernigen Heteroarenen
und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
erhältlich nach einem Verfahren gemäß einem der Ansprüche 19 bis 25.

27. Verbindungen nach Anspruch 26,
wobei
aren ausgewählt ist aus der Gruppe bestehend aus
Benzol, Toluol, Ethylbenzol, *tert*-Butylbenzol, *sec*-Butylbenzol, Propylbenzol, Isopropylbenzol, Benzocyclopentan, 4-Ethyl-toluol, *ortho-*Xylol, *meta*-Xylol, *para-*Xylol, Chlorbenzol, Mesitylen, *para*-Cymol, Anisol, Pyridin, Pyridinderivaten, Diazinen, Diazinderivaten, Triazinen und Triazinderivaten.

28. Verfahren zur Herstellung einer Verbindung
▪ gemäß der allgemeinen Formel
[Ru(aren)(R^{a}-N=CR¹-CR³=N-R^{b})] (A)
wobei
i) aren ausgewählt ist aus der Gruppe bestehend aus einkernigen und mehrkernigen Arenen und einkernigen und mehrkernigen Heteroarenen
und
ii) R¹, R³, R^{a} und R^{b} unabhängig voneinander ausgewählt sind aus der Gruppe bestehend aus H, einem Alkylrest (C1 - C10) und einem Arylrest
oder
▪ gemäß der allgemeinen Formel
[Ru(aren)((R^{c},R^{d})N-N=CR^{H1}-CR^{H3}=N-N(R^{e},R^{f}))] (B)
wobei
i) aren ausgewählt ist aus der Gruppe bestehend aus einkernigen und mehrkernigen Arenen und einkernigen und mehrkernigen Heteroarenen
und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
umfassend die Schritte:
a) Zurverfügungstellung einer Verbindung
gemäß der allgemeinen Formel [Ru(aren)X₂]₂ (C),
wobei
- X = Halogen und
- aren ausgewählt ist aus der Gruppe bestehend aus einkernigen und mehrkernigen Arenen und einkernigen und mehrkernigen Heteroarenen,
b) Umsetzung von [Ru(aren)X₂]₂ mit Zink und einem Liganden gemäß der allgemeinen Formel
R^{a}-N=CR¹-CR³=N-R^{b}
oder
(R^{c},R^{d})N-N=CR^{H1}-CR^{H3}=N-N(R^{e},R^{f})
in einem aprotischen Lösungsmittel.

29. Verfahren nach Anspruch 28, wobei Zink in Form eines Pulvers und/oder in Form von Zinkgranalien hinzugefügt wird.

30. Verfahren nach Anspruch 28 oder 29, wobei
das molare Verhältnis [Ru(aren)X₂]₂ : Zn zwischen 1 : 2 und 1 : 10 beträgt.

31. Verfahren nach einem der Ansprüche 28 bis 30, wobei
das molare Verhältnis
[Ru(aren)X₂]₂: R^{a}-N=CR¹-CR³=N-R^{b}
oder
[Ru(aren)X₂]₂: (R^{c},R^{d})N-N=CR^{H1}-CR¹³=N-N(R^{e},R^{f})
zwischen 1 : 2 und 1 : 10 beträgt.

32. Verfahren nach einem der Ansprüche 28 bis 31, wobei das Lösungsmittel ein Ether, ein Benzolderivat, Acetonitril oder Aceton ist.

33. Verfahren nach einem der Ansprüche 28 bis 32,
wobei das Reaktionsgemisch aus Schritt b) erwärmt wird,
wobei eine Temperatur T₂ des Reaktionsgemisches zwischen 20 °C und 140 °C beträgt.

34. Verfahren nach einem der Ansprüche 28 bis 33, wobei nach Schritt b) ein Schritt c) durchgeführt wird, welcher eine Isolierung von
[Ru(aren)(R^{a}-N=CR¹-CR³=N-R^{b})] (A)
oder
[Ru(aren)((R^{c},R^{d})N-N=CR^{H1}-CR^{H3}=N-N(R^{e},R^{f}))] (B)
umfasst.

35. Verbindungen gemäß der allgemeinen Formel
▪
[Ru(aren)(R^{a}-N=CR¹-CR³=N-R^{b})] (A),
wobei
i) aren ausgewählt ist aus der Gruppe bestehend aus einkernigen und mehrkernigen Arenen und einkernigen und mehrkernigen Heteroarenen
und
ii) R¹, R³, R^{a} und R^{b} unabhängig voneinander ausgewählt sind aus der Gruppe bestehend aus H, einem Alkylrest (C1 - C10) und einem Arylrest
oder
▪ [Ru(aren)((R^{c},R^{d})N-N=CR^{H1}-CR^{H3}=N-N(R^{e},R^{f}))] (B),
wobei
i) aren ausgewählt ist aus der Gruppe bestehend aus einkernigen und mehrkernigen Arenen und einkernigen und mehrkernigen Heteroarenen
und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
erhältlich nach einem Verfahren gemäß einem der Ansprüche 28 bis 34.

36. Verbindungen nach Anspruch 35,
wobei
aren ausgewählt ist aus der Gruppe bestehend aus
Benzol, Toluol, Ethylbenzol, *tert*-Butylbenzol, *sec-*Butylbenzol, Propylbenzol, Isopropylbenzol, Benzocyclopentan, 4-Ethyl-toluol, *ortho-*Xylol*, meta*-Xylol, *para-*Xylol, Chlorbenzol, Mesitylen, *para*-Cymol, Anisol, Pyridin, Pyridinderivaten, Diazinen, Diazinderivaten, Triazinen und Triazinderivaten.

37. Verwendung einer Verbindung gemäß der allgemeinen Formel
▪ [Ru(aren)(R^{a}-N=CR¹-CR³=N-R^{b})] (A),
wobei
i) aren ausgewählt ist aus der Gruppe bestehend aus einkernigen und mehrkernigen Arenen und einkernigen und mehrkernigen Heteroarenen
und
ii) R¹, R³, R^{a} und R^{b} unabhängig voneinander ausgewählt sind aus der Gruppe bestehend aus H, einem Alkylrest (C1 - C10) und einem Arylrest
- nach einem der Ansprüche 1 bis 10,
- erhalten nach einem Verfahren gemäß einem der Ansprüche 28 bis 34
oder
- nach Anspruch 35 oder 36
oder
▪
[Ru(aren)((R^{c},R^{d})N-N=CR^{H1}-CR^{H3}=N-N(R^{e},R^{f}))] (B),
wobei
i) aren ausgewählt ist aus der Gruppe bestehend aus einkernigen und mehrkernigen Arenen und einkernigen und mehrkernigen Heteroarenen
und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
- nach einem der Ansprüche 1 bis 10,
- erhalten nach einem Verfahren gemäß einem der Ansprüche 19 bis 25, oder
- nach Anspruch 26 oder 27
zur Abscheidung einer Ruthenium-Schicht oder einer Ruthenium enthaltenden Schicht auf einer Oberfläche eines Substrats.

38. Verwendung nach Anspruch 37, wobei die Abscheidung mittels eines Gasphasenabscheidungsverfahrens oder mittels eines Atomlagenabscheidungsverfahrens erfolgt.

39. Verfahren zur Herstellung eines Substrats, welches auf einer Oberfläche eine Ruthenium-Schicht oder eine Ruthenium enthaltende Schicht aufweist, umfassend die Schritte:
a) Zurverfügungstellung einer Verbindung gemäß der allgemeinen Formel
▪ [Ru(aren)(R^{a}-N=CR¹-CR³=N-R^{b})] (A),
wobei
i) aren ausgewählt ist aus der Gruppe bestehend aus einkernigen und mehrkernigen Arenen und einkernigen und mehrkernigen Heteroarenen
und
ii) R¹, R³, R^{a} und R^{b} unabhängig voneinander ausgewählt sind aus der Gruppe bestehend aus H, einem Alkylrest (C1 - C10) und einem Arylrest
- nach einem der Ansprüche 1 bis 10,
- erhalten nach einem Verfahren gemäß einem der Ansprüche 28 bis 34
oder
- nach Anspruch 35 oder 36
oder
▪ [Ru(aren)((R^{c},R^{d})N-N=CR^{H1}-CR^{H3}=N-N(R^{e},R^{f}))] (B),
wobei
i) aren ausgewählt ist aus der Gruppe bestehend aus einkernigen und mehrkernigen Arenen und einkernigen und mehrkernigen Heteroarenen
und
ii) R^{H1}, R^{H3}, R^{c}, R^{d}, R^{e} und R^{f} unabhängig voneinander ausgewählt sind aus der Gruppe bestehend aus H, einem Alkylrest (C1 - C10) und einem Arylrest,
- nach einem der Ansprüche 1 bis 10,
- erhalten nach einem Verfahren gemäß einem der Ansprüche 19 bis 25,
oder
- nach Anspruch 26 oder 27,
b) Abscheidung einer Ruthenium-Schicht oder einer Ruthenium enthaltenden Schicht auf einer Oberfläche des Substrats unter Verwendung einer Verbindung gemäß der allgemeinen Formel
[Ru(aren)(R^{a}-N=CR¹-CR³=N-R^{b})] (A)
oder
[Ru(aren)((R^{c},R^{d})N-N=CR^{H1}-CR^{H3}=N-N(R^{e},R^{f}))] (B).

40. Verfahren nach Anspruch 39, wobei die Abscheidung mittels eines Gasphasenabscheidungsverfahrens oder mittels eines Atomlagenabscheidungsverfahrens erfolgt.

41. Substrat, welches auf einer Oberfläche eine Ruthenium-Schicht oder eine Ruthenium enthaltende Schicht aufweist,
wobei die Ruthenium-Schicht oder die Ruthenium enthaltende Schicht herstellbar ist unter Verwendung einer Verbindung
- nach einem der Ansprüche 1 bis 10,
- erhalten nach einem Verfahren gemäß einem der Ansprüche 19 bis 25,
- erhalten nach einem Verfahren gemäß einem der Ansprüche 28 bis 34,
- nach Anspruch 26 oder 27
- oder
- nach Anspruch 35 oder 36.

42. Substrat nach Anspruch 41, wobei das Substrat ein Wafer ist.

43. Verwendung einer Verbindung
- nach einem der Ansprüche 1 bis 10,
- erhalten nach einem Verfahren gemäß einem der Ansprüche 19 bis 25,
- erhalten nach einem Verfahren gemäß einem der Ansprüche 28 bis 34
- nach Anspruch 26 oder 27
- oder
- nach Anspruch 35 oder 36
zur Herstellung eines Halbleiterelements oder eines elektronischen Speichers.
